(19) Europäisches Patentamt
European Patent Office
Office européen des brevets

(11) **EP 3 331 169 A1**

(12) **EUROPEAN PATENT APPLICATION**
published in accordance with Art. 153(4) EPC

(43) Date of publication:
**06.06.2018 Bulletin 2018/23**

(51) Int Cl.:
***H04B 1/10*** *(2006.01)*

(21) Application number: **15902549.3**

(86) International application number:
**PCT/CN2015/088621**

(22) Date of filing: **31.08.2015**

(87) International publication number:
**WO 2017/035742 (09.03.2017 Gazette 2017/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Huawei Technologies Co., Ltd.**
**Longgang District**
**Shenzhen, Guangdong 518129 (CN)**

(72) Inventor: **HE, Jianping**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(54) **SCHEDULING METHOD AND DEVICE**

(57)   Embodiments of the present invention provide a scheduling method and a radio transmit device, which are used in a communications system that performs communication using at least two carriers, where each carrier includes a transmit frequency band and a receive frequency band, and the method includes: selecting, from the transmit frequency band of each carrier by a radio transmit device, a transmit sub-frequency band for each carrier, where there is at least one transmit sub-frequency band that is a proper subset of a transmit frequency band in which the at least one transmit sub-frequency band is located, so that a non-overlapping part exists between a frequency range occupied by an inter-modulation interference signal generated by all transmit sub-frequency bands and the receive frequency band of each carrier, where the non-overlapping part is a non-overlapping frequency range, and the frequency range occupied by the inter-modulation interference signal is an inter-modulation signal interference band; and performing, by the radio transmit device, downlink scheduling using the transmit sub-frequency band of each carrier and performing uplink scheduling using the non-overlapping frequency range. According to a method for reducing inter-modulation interference provided in the embodiments of the present invention, inter-modulation interference can be effectively reduced.

<u>600</u>

A radio transmit device selects, from a transmit frequency band of each carrier, a transmit sub-frequency band for each carrier, where  there is at least one transmit sub-frequency band that is a proper subset of a transmit frequency band in which the at least one transmit sub-frequency band is located, so that a non-overlapping part exists between a frequency range occupied by an inter-modulation interference signal generated by all transmit sub-frequency bands and a receive frequency band of each carrier, where the non-overlapping part is a non-overlapping frequency range and the frequency range occupied by the foregoing inter-modulation interference signal is an inter-modulation signal interference band    610

The radio transmit device performs downlink scheduling using the transmit sub-frequency band of each carrier and performs uplink scheduling using the non-overlapping frequency range    620

FIG. 6

EP 3 331 169 A1

## Description

### TECHNICAL FIELD

Embodiments of the present invention relate to the field of communications technologies, and more specifically, to a scheduling method and a device.

### BACKGROUND

Passive inter-modulation (Passive Inter-Modulation, PIM for short), which is also referred to as inter-modulation (Inter-Modulation, IM), is generated by a passive component. Inter-modulation is generated provided that two or more radio frequency (Radio Frequency, RF for short) signals coexist in one radio frequency conductor. When two or more RF signals exist in the passive component, a multi-order harmonic signal is generated due to non-linearity of the component. A combination of harmonic signals is a product of passive inter-modulation (or referred to as an inter-modulation product, or an inter-modulation signal).

In a radio communications system, when multiple RF signals are transmitted in a same antenna system, and a frequency range (a range of frequencies) of an inter-modulation product generated by these signals and a receive frequency range partially or fully overlap, interference is imposed on a received signal, affecting correct receiving of the signal. In addition, with large-scale commercial use of broadband communications technologies such as Universal Mobile Telecommunications System (Universal Mobile Telecommunications System, UMTS for short) and Long Term Evolution (Long Term Evolution, LTE for short), demands for introduction of new radio frequency bands and sharing between operators increase and an inter-modulation interference problem in the radio communications system is increasingly severe.

### SUMMARY

Embodiments of the present invention provide a scheduling method and a device, which can effectively alleviate impact brought by inter-modulation interference.

According to a first aspect, a scheduling method is provided, and is used in a communications system that performs communication using at least two carriers, where each carrier includes a transmit frequency band and a receive frequency band, and the method includes: selecting, from the transmit frequency band of each carrier by a radio transmit device, a transmit sub-frequency band for each carrier, where there is at least one transmit sub-frequency band that is a proper subset of a transmit frequency band in which the at least one transmit sub-frequency band is located, so that a non-overlapping part exists between a frequency range occupied by an inter-modulation interference signal generated by all transmit sub-frequency bands and the receive frequency band of each carrier, where the non-overlapping part is a non-overlapping frequency range, and the frequency range occupied by the inter-modulation interference signal is an inter-modulation signal interference band; and performing, by the radio transmit device, downlink scheduling using the transmit sub-frequency band of each carrier and performing uplink scheduling using the non-overlapping frequency range.

With reference to the first aspect, in a first possible implementation manner of the first aspect, the non-overlapping frequency range between the frequency range occupied by the inter-modulation interference signal and the receive frequency band of each carrier is all or a part of frequency ranges of the receive frequency band of the carrier.

With reference to the first aspect or the first possible implementation manner of the first aspect, in a second possible implementation manner of the first aspect, a list is stored in the radio transmit device, and the list includes multiple transmit sub-frequency band combinations and an inter-modulation signal interference band corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the selecting, from the transmit frequency band of each carrier by a radio transmit device, a transmit sub-frequency band for each carrier includes: selecting, from the list, a target transmit sub-frequency band combination that meets a requirement of a policy, where a non-overlapping part exists between an inter-modulation signal interference band corresponding to the target transmit sub-frequency band combination and the receive frequency band of each carrier; and selecting the transmit sub-frequency band from the transmit frequency band of each carrier according to the target transmit sub-frequency band combination.

With reference to the second possible implementation manner of the first aspect, in a third possible implementation manner of the first aspect, the policy includes one or more of the following policies: uplink resource utilization maximization policy, service traffic requirement policy, and interference tolerance policy, where: the uplink resource utilization maximization policy requires that the non-overlapping part existing between the inter-modulation signal interference band corresponding to the target transmit sub-frequency band combination and the receive frequency band of each carrier be maximized; the service traffic requirement policy requires that the transmit sub-frequency band of each carrier in the target transmit sub-frequency band combination meet a service traffic requirement; and the interference tolerance policy requires that the non-overlapping part existing between the inter-modulation signal interference band corresponding to the target transmit sub-frequency band combination and the receive frequency band of each carrier be greater than or equal to a preset threshold.

With reference to the first aspect or the first possible implementation manner of the first aspect, in a fourth possible implementation manner of the first aspect, a list is stored in the radio transmit device, and the list includes multiple transmit sub-frequency band combinations and a non-overlapping frequency range corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the selecting, from the transmit frequency band of each carrier by a radio transmit device, a transmit sub-frequency band for each carrier includes: selecting, from the list, a target transmit sub-frequency band combination that meets a requirement of a policy; and selecting the transmit sub-frequency band from the transmit frequency band of each carrier according to the target transmit sub-frequency band combination.

With reference to the fourth possible implementation manner of the first aspect, in a fifth possible implementation manner of the first aspect, the policy includes one or more of the following policies: uplink resource utilization maximization policy, service traffic requirement policy, and interference tolerance policy, where: the uplink resource utilization maximization policy requires that the non-overlapping frequency range corresponding to the target transmit sub-frequency band combination be maximized; the service traffic requirement policy requires that the transmit sub-frequency band of each carrier in the target transmit sub-frequency band combination meet a service traffic requirement; and the interference tolerance policy requires that the non-overlapping frequency range corresponding to the target transmit sub-frequency band combination be greater than or equal to a preset threshold.

With reference to the second to fifth possible implementation manners of the first aspect, in a sixth possible implementation manner of the first aspect, the transmit frequency band of each carrier includes a same quantity of sub-frequency ranges and each of the sub-frequency ranges has a same bandwidth.

With reference to the first aspect or the first possible implementation manner of the first aspect, in a seventh possible implementation manner of the first aspect, the transmit frequency band of each carrier includes at least two sub-frequency ranges; for each carrier, any combination of the at least two sub-frequency ranges is a transmit sub-frequency band of the carrier; and the selecting, from the transmit frequency band of each carrier by a radio transmit device, a transmit sub-frequency band for the carrier includes: traversing all transmit sub-frequency band combinations and determining an inter-modulation signal interference band corresponding to each transmit sub-frequency band combination, where each transmit sub-frequency band combination includes one transmit sub-frequency band of each carrier; finding a transmit sub-frequency band combination corresponding to an inter-modulation signal interference band between which and the receive frequency band of each carrier there is a non-overlapping part; selecting, from the found transmit sub-frequency band combination, a target transmit sub-frequency band combination that meets a requirement of a policy; and selecting the transmit sub-frequency band from the transmit frequency band of each carrier according to the target transmit sub-frequency band combination.

With reference to the seventh possible implementation manner of the first aspect, in an eighth possible implementation manner of the first aspect, the policy includes one or more of the following policies: uplink resource utilization maximization policy, service traffic requirement policy, and interference tolerance policy, where: the uplink resource utilization maximization policy requires that the non-overlapping part existing between the inter-modulation signal interference band corresponding to the target transmit sub-frequency band combination and the receive frequency band of each carrier be maximized, or requires that the non-overlapping frequency range corresponding to the target transmit sub-frequency band combination be maximized; the service traffic requirement policy requires that the transmit sub-frequency band of each carrier in the target transmit sub-frequency band combination meet a service traffic requirement; and the interference tolerance policy requires that the non-overlapping part existing between the inter-modulation signal interference band corresponding to the target transmit sub-frequency band combination and the receive frequency band of each carrier be greater than or equal to a preset threshold, or requires that the non-overlapping frequency range corresponding to the target transmit sub-frequency band combination be greater than or equal to a preset threshold.

According to a second aspect, a scheduling method is provided, and is used in a communications system that performs communication using at least two carriers, where each carrier includes a transmit frequency band and a receive frequency band, and the method includes: determining, by a radio transmit device from the at least two carriers, a target carrier that may be interfered with by inter-modulation; selecting, from the receive frequency band of the target carrier by the radio transmit device, a receive sub-frequency band for the target carrier; determining, by the radio transmit device, a transmit sub-frequency band for each carrier according to the selected receive sub-frequency band, so that a non-overlapping part exists between a frequency range occupied by an inter-modulation interference signal generated by the transmit sub-frequency bands of the at least two carriers and the receive frequency band of the target carrier, where the non-overlapping part includes the selected receive sub-frequency band; and performing, by the radio transmit device, downlink scheduling using the transmit sub-frequency band of each carrier and performing uplink scheduling using the receive sub-frequency band.

With reference to the second aspect, in a first possible implementation manner of the second aspect, a list is stored in the radio transmit device, and the list includes multiple transmit sub-frequency band combinations and an inter-modulation signal interference band corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the selecting, from the receive frequency band of the target carrier by the radio transmit device, a receive sub-frequency band for the target carrier includes: selecting, from the list, a target inter-modulation signal interference band that meets a requirement of a policy, where a non-overlapping part exists between the selected target inter-modulation signal interference band and the receive frequency band of the target carrier; and using the non-overlapping part existing between the selected target inter-modulation signal interference band and the receive frequency band of the target carrier as the receive sub-frequency band selected for the target carrier.

With reference to the first possible implementation manner of the second aspect, in a second possible implementation manner of the second aspect, the policy includes one or more of the following policies: uplink resource utilization maximization policy, service traffic requirement policy, and interference tolerance policy, where: the uplink resource utilization maximization policy requires that the non-overlapping part existing between the target inter-modulation signal interference band and the receive frequency band of the target carrier be maximized; the service traffic requirement policy requires that the transmit sub-frequency band of each carrier in a transmit sub-frequency band combination corresponding to the target inter-modulation signal interference band meet a service traffic requirement; and the interference tolerance policy requires that the non-overlapping part existing between the target inter-modulation signal interference band and the receive frequency band of the target carrier be greater than or equal to a preset threshold.

With reference to the second aspect, in a third possible implementation manner of the second aspect, a list is stored in the radio transmit device, and the list includes multiple transmit sub-frequency band combinations and a non-overlapping frequency range corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, the selecting, from a receive frequency band of the target carrier by the radio transmit device, a receive sub-frequency band for the target carrier includes: selecting, from the list, a target non-overlapping frequency range that meets a requirement of a policy; and using the selected target non-overlapping frequency range as the receive sub-frequency band selected for the target carrier.

With reference to the third possible implementation manner of the second aspect, in a fourth possible implementation manner of the second aspect, the policy includes one or more of the following policies: uplink resource utilization maximization policy, service traffic requirement policy, and interference tolerance policy, where: the uplink resource utilization maximization policy requires that the target non-overlapping frequency range be maximized; the service traffic requirement policy requires that the transmit sub-frequency band of each carrier in a transmit sub-frequency band combination corresponding to the target non-overlapping frequency range meet a service traffic requirement; and the interference tolerance policy requires that the target non-overlapping frequency range be greater than or equal to a preset threshold.

With reference to the first to fourth possible implementation manners of the second aspect, in a fifth possible implementation manner of the second aspect, the transmit frequency band of each carrier includes a same quantity of sub-frequency ranges and each of the sub-frequency ranges has a same bandwidth.

With reference to the second aspect, in a sixth possible implementation manner of the second aspect, the transmit frequency band of each carrier includes at least two sub-frequency ranges; for each carrier, any combination of the at least two sub-frequency ranges is a transmit sub-frequency band of the carrier; and the method further includes: traversing all transmit sub-frequency band combinations and determining an inter-modulation signal interference band corresponding to each transmit sub-frequency band combination, where each transmit sub-frequency band combination includes one transmit sub-frequency band of each carrier; and the selecting, from the receive frequency band of the target carrier by the radio transmit device, a receive sub-frequency band for the target carrier includes: selecting, from the inter-modulation signal interference bands corresponding to all the transmit sub-frequency band combinations, a target inter-modulation signal interference band that meets a requirement of a policy, where a non-overlapping part exists between the selected target inter-modulation signal interference band and the receive frequency band of the target carrier; and using the non-overlapping part existing between the selected target inter-modulation signal interference band and the receive frequency band of the target carrier as the receive sub-frequency band selected for the target carrier.

With reference to the sixth possible implementation manner of the second aspect, in a seventh possible implementation manner of the second aspect, the policy includes one or more of the following policies: uplink resource utilization maximization policy, service traffic requirement policy, and interference tolerance policy, where: the uplink resource utilization maximization policy requires that the non-overlapping part existing between the target inter-modulation signal interference band and the receive frequency band of the target carrier be maximized; the service traffic requirement policy requires that the transmit sub-frequency band of each carrier in a transmit sub-frequency band combination corresponding to the target inter-modulation signal interference band meet a service traffic requirement; and the interference tolerance policy requires that the non-overlapping part existing between the target inter-modulation signal interference band and the receive frequency band of the target carrier be greater than or equal to a preset threshold.

According to a third aspect, a radio transmit device is provided, and is used in a communications system that performs communication using at least two carriers, where each carrier includes a transmit frequency band and a receive frequency band, and the device includes: a selecting unit, configured to select, from the transmit frequency band of each carrier, a transmit sub-frequency band for each carrier, where there is at least one transmit sub-frequency band that is a proper subset of a transmit frequency band in which the at least one transmit sub-frequency band is located, so that a non-overlapping part exists between a frequency range occupied by an inter-modulation interference signal generated by all transmit sub-frequency bands and the receive frequency band of each carrier, where the non-overlapping part is a non-overlapping frequency range, and the frequency range occupied by the inter-modulation interference signal is an inter-modulation signal interference band; and a scheduling unit, configured to perform downlink scheduling using the transmit sub-frequency band of each carrier and perform uplink scheduling using the non-overlapping frequency range.

With reference to the third aspect, in a first possible implementation manner of the third aspect, the non-overlapping frequency range between the frequency range occupied by the inter-modulation interference signal and the receive frequency band of each carrier is all or a part of frequency ranges of the receive frequency band of the carrier.

With reference to the third aspect or the first possible implementation manner of the third aspect, in a second possible implementation manner of the third aspect, a list is stored in the radio transmit device, and the list includes multiple transmit sub-frequency band combinations and an inter-modulation signal interference band corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the selecting unit is specifically configured to: select, from the list, a target transmit sub-frequency band combination that meets a requirement of a policy, where a non-overlapping part exists between an inter-modulation signal interference band corresponding to the target transmit sub-frequency band combination and the receive frequency band of each carrier; and select the transmit sub-frequency band from the transmit frequency band of each carrier according to the target transmit sub-frequency band combination.

With reference to the second possible implementation manner of the third aspect, in a third possible implementation manner of the third aspect, the policy includes one or more of the following policies: uplink resource utilization maximization policy, service traffic requirement policy, and interference tolerance policy, where: the uplink resource utilization maximization policy requires that the non-overlapping part existing between the inter-modulation signal interference band corresponding to the target transmit sub-frequency band combination and the receive frequency band of each carrier be maximized; the service traffic requirement policy requires that the transmit sub-frequency band of each carrier in the target transmit sub-frequency band combination meet a service traffic requirement; and the interference tolerance policy requires that the non-overlapping part existing between the inter-modulation signal interference band corresponding to the target transmit sub-frequency band combination and the receive frequency band of each carrier be greater than or equal to a preset threshold.

With reference to the third aspect or the first possible implementation manner of the third aspect, in a fourth possible implementation manner of the third aspect, a list is stored in the radio transmit device, and the list includes multiple transmit sub-frequency band combinations and a non-overlapping frequency range corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the selecting unit is specifically configured to: select, from the list, a target transmit sub-frequency band combination that meets a requirement of a policy; and select the transmit sub-frequency band from the transmit frequency band of each carrier according to the target transmit sub-frequency band combination.

With reference to the fourth possible implementation manner of the third aspect, in a fifth possible implementation manner of the third aspect, the policy includes one or more of the following policies: uplink resource utilization maximization policy, service traffic requirement policy, and interference tolerance policy, where: the uplink resource utilization maximization policy requires that the non-overlapping frequency range corresponding to the target transmit sub-frequency band combination be maximized; the service traffic requirement policy requires that the transmit sub-frequency band of each carrier in the target transmit sub-frequency band combination meet a service traffic requirement; and the interference tolerance policy requires that the non-overlapping frequency range corresponding to the target transmit sub-frequency band combination be greater than or equal to a preset threshold.

With reference to the second to fifth possible implementation manners of the third aspect, in a sixth possible implementation manner of the third aspect, the transmit frequency band of each carrier includes a same quantity of sub-frequency ranges and each of the sub-frequency ranges has a same bandwidth.

With reference to the third aspect or the first possible implementation manner of the third aspect, in a seventh possible implementation manner of the third aspect, the transmit frequency band of each carrier includes at least two sub-frequency ranges; for each carrier, any combination of the at least two sub-frequency ranges is a transmit sub-frequency band of the carrier; and the selecting unit is specifically configured to: traverse all transmit sub-frequency band combinations and determine an inter-modulation signal interference band corresponding to each transmit sub-frequency band combination, where each transmit sub-frequency band combination includes one transmit sub-frequency band of each carrier; find a transmit sub-frequency band combination corresponding to an inter-modulation signal interference band between which and the receive frequency band of each carrier there is a non-overlapping part; select, from the found transmit sub-frequency band combination, a target transmit sub-frequency band combination that meets a requirement of a policy; and select the transmit sub-frequency band from the transmit frequency band of each carrier according to the target transmit sub-frequency band combination.

With reference to the seventh possible implementation manner of the third aspect, in an eighth possible implementation manner of the third aspect, the policy includes one or more of the following policies: uplink resource utilization maximization policy, service traffic requirement policy, and interference tolerance policy, where: the uplink resource utilization maximization policy requires that the non-overlapping part existing between the inter-modulation signal interference band corresponding to the target transmit sub-frequency band combination and the receive frequency band of each carrier be maximized, or requires that the non-overlapping frequency range corresponding to the target transmit sub-frequency band combination be maximized; the service traffic requirement policy requires that the transmit sub-frequency band of each carrier in the target transmit sub-frequency band combination meet a service traffic requirement; and the interference tolerance policy requires that the non-overlapping part existing between the inter-modulation signal interference band corresponding to the target transmit sub-frequency band combination and the receive frequency band of each carrier be greater than or equal to a preset threshold, or requires that the non-overlapping frequency range corresponding to the target transmit sub-frequency band combination be greater than or equal to a preset threshold.

According to a fourth aspect, a radio transmit device is provided, and is used in a communications system that performs communication using at least two carriers, where each carrier includes a transmit frequency band and a receive frequency band, and the device includes: a determining unit, configured to determine, from the at least two carriers, a target carrier that may be interfered with by inter-modulation; a selecting unit, configured to select, from the receive frequency band of the target carrier, a receive sub-frequency band for the target carrier, where the determining unit is further configured to determine a transmit sub-frequency band for each carrier according to the selected receive sub-frequency band, so that a non-overlapping part exists between a frequency range occupied by an inter-modulation interference signal generated by the transmit sub-frequency bands of the at least two carriers and the receive frequency band of the target carrier, where the non-overlapping part includes the selected receive sub-frequency band; and a scheduling unit, configured to perform downlink scheduling using the transmit sub-frequency band of each carrier and perform uplink scheduling using the receive sub-frequency band.

With reference to the fourth aspect, in a first possible implementation manner of the fourth aspect, a list is stored in the radio transmit device, and the list includes multiple transmit sub-frequency band combinations and an inter-modulation signal interference band corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the selecting unit is configured to: select, from the list, a target inter-modulation signal interference band that meets a requirement of a policy, where a non-overlapping part exists between the selected target inter-modulation signal interference band and the receive frequency band of the target carrier; and use the non-overlapping part existing between the selected target inter-modulation signal interference band and the receive frequency band of the target carrier as the receive sub-frequency band selected for the target carrier.

With reference to the first possible implementation manner of the fourth aspect, in a second possible implementation manner of the fourth aspect, the policy includes one or more of the following policies: uplink resource utilization maximization policy, service traffic requirement policy, and interference tolerance policy, where: the uplink resource utilization maximization policy requires that the non-overlapping part existing between the target inter-modulation signal interference band and the receive frequency band of the target carrier be maximized; the service traffic requirement policy requires that the transmit sub-frequency band of each carrier in a transmit sub-frequency band combination corresponding to the target inter-modulation signal interference band meet a service traffic requirement; and the interference tolerance policy requires that the non-overlapping part existing between the target inter-modulation signal interference band and the receive frequency band of the target carrier be greater than or equal to a preset threshold.

With reference to the fourth aspect, in a third possible implementation manner of the fourth aspect, a list is stored in the radio transmit device, and the list includes multiple transmit sub-frequency band combinations and a non-overlapping frequency range corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the selecting unit is specifically configured to: select, from the list, a target non-overlapping frequency range that meets a requirement of a policy; and use the selected target non-overlapping frequency range as the receive sub-frequency band selected for the target carrier.

With reference to the third possible implementation manner of the fourth aspect, in a fourth possible implementation manner of the fourth aspect, the policy includes one or more of the following policies: uplink resource utilization maximization policy, service traffic requirement policy, and interference tolerance policy, where: the uplink resource utilization maximization policy requires that the target non-overlapping frequency range be maximized; the service traffic requirement policy requires that the transmit sub-frequency band of each carrier in a transmit sub-frequency band combination corresponding to the target non-overlapping frequency range meet a service traffic requirement; and the interference tolerance policy requires that the target non-overlapping frequency range be greater than or equal to a preset threshold.

With reference to the first to fourth possible implementation manners of the fourth aspect, in a fifth possible implementation manner of the fourth aspect, the transmit frequency band of each carrier includes a same quantity of sub-frequency ranges and each of the sub-frequency ranges has a same bandwidth.

With reference to the fourth aspect, in a sixth possible implementation manner of the fourth aspect, the transmit frequency band of each carrier includes at least two sub-frequency ranges; for each carrier, any combination of the at least two sub-frequency ranges is a transmit sub-frequency band of the carrier; and the selecting unit is further configured to: traverse all transmit sub-frequency band combinations and determine an inter-modulation signal interference band corresponding to each transmit sub-frequency band combination, where each transmit sub-frequency band combination includes one transmit sub-frequency band of each carrier; and the selecting, from the receive frequency band of the target carrier by the radio transmit device, a receive sub-frequency band for the target carrier includes: selecting, from the inter-modulation signal interference bands corresponding to all the transmit sub-frequency band combinations, a target inter-modulation signal interference band that meets a requirement of a policy, where a non-overlapping part exists between the selected target inter-modulation signal interference band and the receive frequency band of the target carrier; and using the non-overlapping part existing between the selected target inter-modulation signal interference band and the receive frequency band of the target carrier as the receive sub-frequency band selected for the target carrier.

With reference to the sixth possible implementation manner of the fourth aspect, in a seventh possible implementation manner of the fourth aspect, the policy includes one or more of the following policies: uplink resource utilization maximization policy, service traffic requirement policy, and interference tolerance policy, where: the uplink resource utilization maximization policy requires that the non-overlapping part existing between the target inter-modulation signal interference band and the receive frequency band of the target carrier be maximized; the service traffic requirement policy requires that the transmit sub-frequency band of each carrier in a transmit sub-frequency band combination corresponding to the target inter-modulation signal interference band meet a service traffic requirement; and the interference tolerance policy requires that the non-overlapping part existing between the target inter-modulation signal interference band and the receive frequency band of the target carrier be greater than or equal to a preset threshold.

According to the embodiments of the present invention, characteristics of an inter-modulation product are fully utilized to provide a manner of joint scheduling and frequency domain resource staggering so that an inter-modulation interference band does not fall within a receive frequency band as far as possible. In addition, for a frequency band that will be unavoidably interfered with by the inter-modulation product, a manner of no scheduling is used to resolve an inter-modulation interference problem. A frequency range of an inter-modulation interference signal changes as frequencies and bandwidths of carriers that generate inter-modulation change. Therefore, when downlink scheduling is being performed, suitable frequencies of transmit carriers and suitable bandwidths occupied by the transmit carriers are selected, so that a generated inter-modulation interference signal and a receive frequency band are staggered or the receive frequency band is occupied as little as possible, and uplink scheduling is performed using a frequency range not occupied by the inter-modulation interference signal during the uplink scheduling, thereby resolving an inter-modulation interference problem.

## BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of inter-modulation interference generation according to an embodiment of the present invention;

FIG. 2 is a schematic block diagram of a radio communications system according to an embodiment of the present invention;

FIG. 3 is a schematic diagram of a method for reducing inter-modulation interference in a narrowband communications system;

FIG. 4 is a schematic diagram of frequency bands of a type of inter-modulation product according to an embodiment of the present invention;

FIG. 5 is a schematic diagram of a principle of a scheduling method according to an embodiment of the present invention;

FIG. 6 is a flowchart of a scheduling method according to an embodiment of the present invention;

FIG. 7 is a flowchart of a process of selecting a transmit sub-frequency band according to an embodiment of the present invention;

FIG. 8 is a flowchart of a process of selecting a transmit sub-frequency band according to another embodiment of the present invention;

FIG. 9 is a schematic diagram of allocation of frequency ranges for reducing inter-modulation interference according to an embodiment of the present invention;

FIG. 10 is a schematic diagram of allocation of frequency ranges for reducing inter-modulation interference according to another embodiment of the present invention;

FIG. 11 is a flowchart of a scheduling method according to another embodiment of the present invention;

FIG. 12 is a schematic block diagram of a device according to an embodiment of the present invention;

FIG. 13 is a schematic block diagram of a device according to another embodiment of the present invention;

FIG. 14 is a schematic block diagram of a device according to another embodiment of the present invention; and

FIG. 15 is a schematic block diagram of a device according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions in the embodiments of the present invention may be applied in various communications systems, for example, a Global System for Mobile Communications (Global System for Mobile Communications, GSM), a UMTS system, an LTE system, an LTE frequency division duplex (Frequency Division Duplex, FDD) system, and an LTE time division duplex (Time Division Duplex, TDD) system. It should be understood that the present invention no limitation thereto. The technical solutions in the embodiments of the present invention may be used in any system that is in a radio frequency device and that performs communication using two or more RF signals.

First, it should be noted that "multiple" ("multiple types") in the present application refer to two (types) or more than two (types). The term "and /or" describes an association relationship for describing associated objects and represents that three relationships may exist. For example, A and/or B may represent the following three cases: Only A exists, both A and B exist, and only B exists. The character "/" generally indicates an "or" relationship between the associated objects.

For brevity of description, the following embodiments all use two RF signals as an example for description. Technical means for generating inter-modulation and resolving inter-modulation interference of more RF signals can all be obtained based on those of two RF signals. Because principles and technical implementation thereof are the same, details are not described in the embodiments of the present invention.

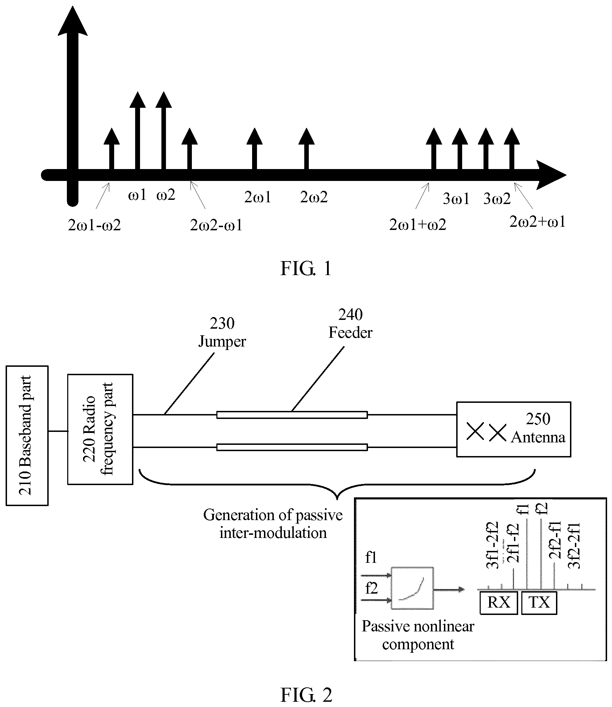

The following describes inter-modulation generation by using two RF signals as an example with reference to the accompanying drawings. Referring to FIG. 1, FIG. 1 is a schematic diagram of inter-modulation generation according to an embodiment of the present invention. As shown in FIG. 1, two RF signals $\omega 1$ and $\omega 2$ (which may be understood as first-order harmonics) exist in a radio frequency device, where second-order harmonics generated by the two RF signals are $2\omega 1$ and $2\omega 2$, third-order harmonics are $3\omega 1$ and $3\omega 2$, and there are higher-order harmonics in sequence. The higher-order harmonics are not shown herein because its impact of may be ignored. A combination of these harmonic signals is an inter-modulation product, and an order of the inter-modulation product is a sum of integral multiples of frequencies of two mother signals that generate the inter-modulation product. Referring to Table 1, Table 1 provides third-order to ninth-order inter-modulation products, where F1 and F2 are variables, for example, may be $\omega 1$ and $\omega 2$, respectively, or may be $\omega 2$ and $\omega 1$, respectively. For example, third-order inter-modulation products include $2\omega 1 - \omega 2$, $2\omega 2 - \omega 1$, $2\omega 1 + \omega 2$, and $2\omega 2 + \omega 1$.

It should be noted that a higher-order inter-modulation product has a smaller amplitude. In specific implementation, an amplitude of an inter-modulation product with an order above three (excluding order three) is relatively small, and it is adequate to suppress impact of the inter-modulation product by using a component; therefore, the inter-modulation product with an order above three may be ignored and is not shown herein again.

**Table 1**

| Inter-modulation calculation | Inter-modulation order |
|---|---|
| $2*F_1 \pm 1*F_2 = F_{IM3}$ | Order three (2+1=IM3) |
| $3*F_1 \pm 3*F_2 = F_{IM5}$ | Order five (3+2=IM5) |
| $4*F_1 \pm 3*F_2 = F_{IM7}$ | Order seven (4+3=IM7) |
| $5*F_1 \pm 4*F_2 = F_{IM7}$ | Ninth-order (5+4=IM9) |

The following describes inter-modulation generation by using a common radio communications system as an example. Referring to FIG. 2, FIG. 2 is a schematic diagram of a radio communications system according to an embodiment of the present invention. As shown in FIG. 2, the communications system includes a baseband part 210, a radio frequency part 220, and an antenna 250. The baseband part 210 is configured to implement baseband processing and transmit a processed baseband signal to the radio frequency part 220, so that the radio frequency part 220 implements intermediate and radio frequency processing or radio frequency processing. A processed radio frequency signal is transmitted through a jumper 230 and a feeder 240 to the antenna 250 for emission. The jumper 230, the feeder 240, and the antenna 250 form an antenna system, which is used only as an example herein, but not used to limit composition of an antenna system. As shown in FIG. 2, inter-modulation is generated in the antenna system. In the antenna system, two RF signals coexist, that is, signals at two frequencies, f1 and f2, coexist for emission, and an inter-modulation product 2f1-f2 generated by f1 and f2 is exactly in a receive frequency band and causes interference to a received signal. Certainly, a fifth-order inter-modulation product 3f1-2f2 may also be in the receive frequency band; however, impact caused by the fifth-order inter-modulation product may be ignored because of a small amplitude of the fifth-order inter-modulation product.

In the present application, an inter-modulation product that causes non-ignorable interference to a received signal is referred to as an inter-modulation interference signal. A frequency range occupied by the inter-modulation interference signal is referred to as an inter-modulation signal interference band.

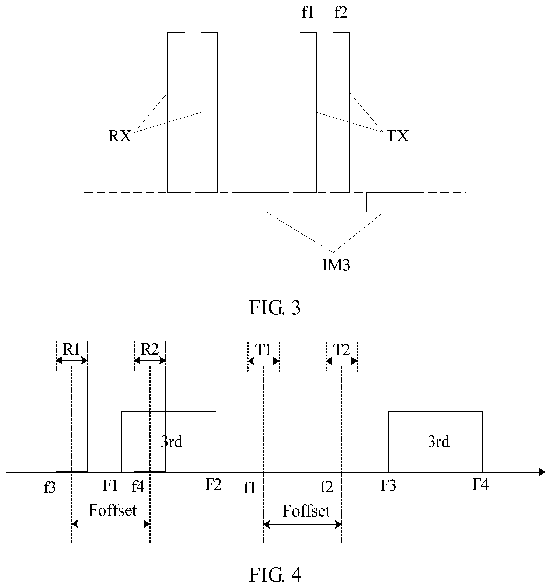

In the GSM system, because a receive frequency band and a transmit frequency range are relatively narrow, suitable frequencies may be selected to prevent an inter-modulation interference signal from hitting an uplink frequency, that is, the inter-modulation interference signal and the receive frequency band are staggered, thereby resolving an inter-modulation interference problem. As shown in FIG. 3, suitable transmit frequencies f1 and f2 are selected, so that a generated inter-modulation product IM3 and a receive frequency band RX are staggered, which can resolve an inter-modulation interference problem. However, this method is applicable only to a narrowband system like the GSM, because a frequency range of an inter-modulation product generated in the narrowband system is also a narrowband and it is relatively easy to find a signal frequency band that is not interfered with. However, when communications technologies develop towards broadband, for example, a bandwidth of the UMTS is 5 MHz and a maximum bandwidth in LTE is 20 MHz, where a transmit frequency band and a receive frequency band are both relatively broad, and a frequency range of an inter-modulation product is very broad; and therefore, this manner is inapplicable.

Referring to FIG. 4, FIG. 4 is a schematic diagram of a frequency band of a type of inter-modulation product according to an embodiment of the present invention. As shown in FIG. 4, two carriers are used as an example. An interval between the two carriers is *Foffset* and bandwidths of the two carriers are *BW1* and *BW2*, respectively. Start frequencies of transmit frequency bands of the two carriers are *f1* and *f2*, respectively, and *f2 = f1 + Foffset*. Start frequencies of receive frequency bands are *f3* and *f4*, and *f4 = f3 + Foffset*. It is assumed that frequencies at endpoints of frequency ranges of a third-order inter-modulation product are *F1*, *F2*, *F3*, and *F4*, respectively, and then:

$$F1 = 2*f1-(f2+BW2) = 2*f1 - (f1+Foffset+BW2) = f1-Foffset-BW2 \text{ (1)}$$

$$F2 = 2*(f1+BW1)-f2 = 2*f1+2*BW1 -(f1+Foffset) = f1-Foffset+2*BW1 \text{ (2)}$$

$$F3 = 2*f2-(f1+BW1) = 2*(f1+Foffset)-(f1+BW1) = f1+2*Foffset-BW1 \text{ (3)}$$

$$F4 = 2*(f2+BW2)-f1 = 2*(f1+Foffset+BW2)-f1 = f1+2*Foffset + 2*BW2 \text{ (4)}$$

It can be learned from the foregoing formulas that a bandwidth of the inter-modulation product is proportional to original bandwidths that generate inter-modulation, that is, proportional to bandwidths *(BW1* and *BW2)* of carriers that generate inter-modulation. It is very easy for the inter-modulation product to hit a receive frequency band, for example, the frequency range F1-F2 of the inter-modulation product hits a receive frequency band R2 and causes interference to a received signal. It can be learned that a frequency selection solution for the GSM system is not applicable to a broadband system to resolve an inter-modulation interference problem in the broadband system.

According to an embodiment of the present invention, characteristics of an inter-modulation product are fully utilized to provide a manner of joint scheduling and frequency domain resource staggering so that an inter-modulation interference band does not fall within a receive frequency band as far as possible. In addition, for a frequency band that will be unavoidably interfered with by the inter-modulation product, a manner of no scheduling is used to resolve an inter-modulation interference problem. A frequency range of an inter-modulation interference signal changes as frequencies and bandwidths of carriers that generate inter-modulation change. Therefore, when downlink scheduling is being performed, suitable frequencies of transmit carriers and suitable bandwidths occupied by the transmit carriers are selected, so that a generated inter-modulation interference signal and a receive frequency band are staggered or the receive frequency band is occupied as little as possible, and uplink scheduling is performed using a frequency range not occupied by the inter-modulation interference signal during the uplink scheduling, thereby resolving an inter-modulation interference problem.

The following describes the foregoing technical solution with reference to the accompanying drawings.

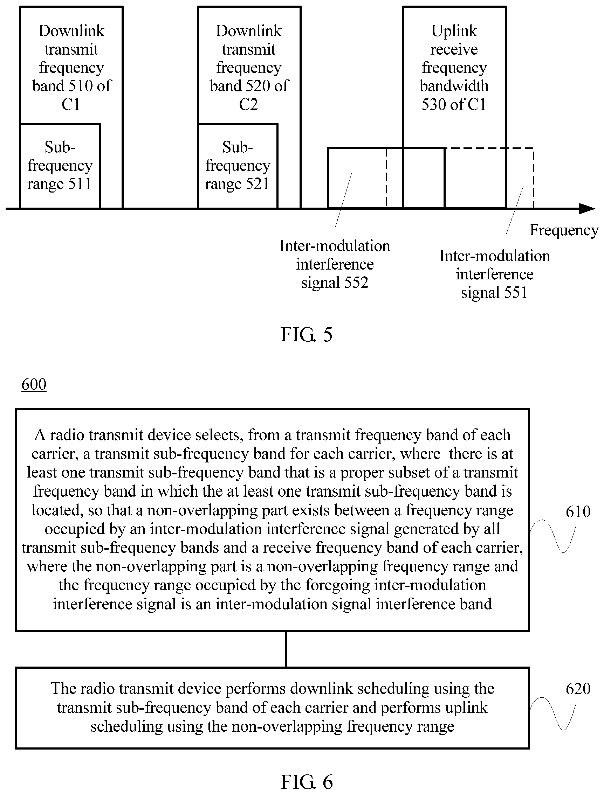

Referring to FIG. 5 and FIG. 6, FIG. 5 is a schematic diagram of a principle of a scheduling method according to an embodiment of the present invention and FIG. 6 is a flowchart of a scheduling method according to an embodiment of the present invention. The scheduling method is executed by a radio transmit device and used in a communications system that performs communication using at least two carriers, where each carrier includes a transmit frequency band and a receive frequency band. It should be understood that the radio transmit device is a device that can transmit a radio frequency signal, for example, may be a radio frequency section, a radio access point, or a radio remote unit (Radio Remote Unit, RRU) of a base station; and the present invention is not limited thereto. The base station herein refers to a device that connects a terminal to a wireless network, including a base station in various communications standards, for example, an evolved Node B (evolved Node B, eNB), a radio network controller (radio network controller, RNC), a Node B (Node B, NB), a base station controller (Base Station Controller, BSC), a base transceiver station (Base Transceiver Station, BTS), or a home base station (for example, Home evolved Node B, or Home Node B, HNB). It should be further understood that each carrier corresponds to one transmit frequency band, or each carrier occupies one transmit bandwidth at one frequency; in addition, each carrier corresponds to one receive frequency band, or each carrier occupies one receive bandwidth at one frequency; transmit frequency bands between any two carriers do not overlap; and receive frequency bands between any two carriers also do not overlap. In addition, a transmit frequency band and a receive frequency band appear in a pair. When a transmit frequency band is determined, a receive frequency band is also determined.

As shown in FIG. 5, two carriers, C1 and C2, are used as an example. An inter-modulation interference signal 551 generated by a downlink transmit frequency band 510 of the carrier C1 and a downlink transmit frequency band 520 of the carrier C2 causes interference to an uplink receive frequency band 530 of the carrier C1. In this embodiment of the present invention, sub-frequency ranges 511 and 521 are selected respectively from the downlink transmit frequency band 510 of the carrier C1 and the downlink transmit frequency band 520 of the carrier C2, so that a non-overlapping part exists between a generated inter-modulation interference signal 552 and the uplink receive frequency band 530 of the carrier C1, for example, the generated inter-modulation interference signal 552 may not occupy the uplink receive frequency band 530 of the carrier C1 or occupy as little the uplink receive frequency band 530 of the carrier C1 as possible. Then, when scheduling is being performed on an uplink of the carrier C1, the non-overlapping part is used to perform the uplink scheduling. In this way, a range of frequencies of the inter-modulation interference signal does not overlap a range of frequencies actually used by a terminal, which resolves an inter-modulation interference problem.

As shown in FIG. 6, the scheduling method includes the following steps:

S610. The radio transmit device selects, from the transmit frequency band of each carrier, a transmit sub-frequency band for each carrier, where there is at least one transmit sub-frequency band that is a proper subset of a transmit frequency band in which the at least one transmit sub-frequency band is located, so that a non-overlapping part exists between a frequency range occupied by an inter-modulation interference signal generated by all transmit sub-frequency bands and the receive frequency band of each carrier, where the non-overlapping part is a non-overlapping frequency range and the frequency range occupied by the foregoing inter-modulation interference signal is an inter-modulation signal interference band.

S620. The radio transmit device performs downlink scheduling using the transmit sub-frequency band of each carrier and performs uplink scheduling using the non-overlapping frequency range.

It can be learned that, because a frequency range of an inter-modulation interference signal changes as frequencies and bandwidths of carriers that generate inter-modulation change, when performing downlink scheduling, a radio transmit device selects, from the transmit frequency band of each carrier, a suitable transmit frequency and a suitable occupied bandwidth, that is, a transmit sub-frequency band, where there is at least one carrier whose transmit sub-frequency band does not fully occupy an entire transmit frequency band, so that a non-overlapping part exists between a frequency range occupied by an inter-modulation interference signal generated by the transmit sub-frequency bands of these carriers and a receive frequency band of each carrier. In this way, the non-overlapping part may be used to perform uplink scheduling, thereby resolving an inter-modulation interference problem.

In addition, this embodiment of the present invention involves only a physical-layer resource scheduling module of a software system, and an inter-modulation interference problem can be resolved by using a solution in which only software is used for improvement, without a need of replacing a component or reconstructing an antenna system. Therefore, costs are relatively low and an effect is evident.

It can be learned that, in this embodiment, a problem that an inter-modulation interference signal causes interference to an uplink signal is resolved by reducing downlink transmit resources. In addition, because a frequency range of an inter-modulation interference signal extends as bandwidths of carriers that generate inter-modulation increase, when a shorter transmit sub-frequency range is selected, a frequency range of an inter-modulation interference signal is shorter and more uplink resources are available, but utilization of downlink resources is lower. Therefore, in specific implementation, a service traffic situation of each carrier may be taken into consideration to balance utilization of downlink resources and utilization of uplink resources.

Optionally, as an embodiment of the present invention, the non-overlapping frequency range between the frequency range occupied by the inter-modulation interference signal and the receive frequency band of each carrier is all or a part of frequency ranges of the receive frequency band of the carrier. That is, the foregoing non-overlapping part between the frequency range occupied by the inter-modulation interference signal and the receive frequency band of each carrier may be all of the receive frequency band, or may be a part of the receive frequency band. That is, the inter-modulation interference signal and the receive frequency band may be staggered, or the inter-modulation interference signal may occupy a part of the receive frequency band. Preferably, when staggering is impossible, the receive frequency band is occupied as little as possible. In this way, more uplink resources may be available.

According to this embodiment of the present invention, characteristics of an inter-modulation product are fully utilized to provide a manner of joint scheduling and frequency domain resource staggering so that an inter-modulation interference band does not fall within a receive frequency band as far as possible. In addition, for a frequency band that will be unavoidably interfered with by the inter-modulation product, a manner of no scheduling is used to resolve an inter-modulation interference problem. A frequency range of an inter-modulation interference signal changes as frequencies and bandwidths of carriers that generate inter-modulation change. Therefore, when downlink scheduling is being performed, suitable frequencies of transmit carriers and suitable bandwidths occupied by the transmit carriers are selected, so that a generated inter-modulation interference signal and a receive frequency band are staggered or the receive frequency band is occupied as little as possible, and uplink scheduling is performed using a frequency range not occupied by the inter-modulation interference signal during the uplink scheduling, thereby resolving an inter-modulation interference problem.

For each carrier, a transmit sub-frequency band may be selected using the following method: dividing the transmit frequency band of the carrier into N sub-frequency ranges in advance, where N is a positive integer greater than or equal to 2, and any combination of these sub-frequency ranges forms a transmit sub-frequency band of the carrier. Combination situations of the N sub-frequency ranges are as follows: there are c(N, M)=N!/((N-M)!*M!) combinations in total that are formed by M sub-frequency ranges arbitrarily selected from the N sub-frequency ranges, where M is a positive integer less than or equal to N, and "!" represents factorial. All combinations formed by all possible values of M are all combinations of the N sub-frequency ranges. One combination may be selected for each carrier, combinations of all carriers may be further combined, and each type of combination is one transmit sub-frequency band combination. An inter-modulation interference signal generated by each transmit sub-frequency band combination may be obtained in advance by means of computation, so that an inter-modulation signal interference band of each transmit sub-frequency band combination can be predetermined, and in this way, one transmit sub-frequency band combination may be selected according to the inter-modulation signal interference band of each transmit sub-frequency band combination, so that the inter-modulation signal interference band and a receive frequency band are staggered or a non-overlapping part exists between the inter-modulation signal interference band and a receive frequency band. In addition, an inter-modulation interference signal generated by each transmit sub-frequency band combination may also be computed in advance, so that a non-overlapping frequency range of each transmit sub-frequency band combination may be predetermined and in this way, one transmit sub-frequency band combination may be selected according to the non-overlapping frequency range of each transmit sub-frequency band combination.

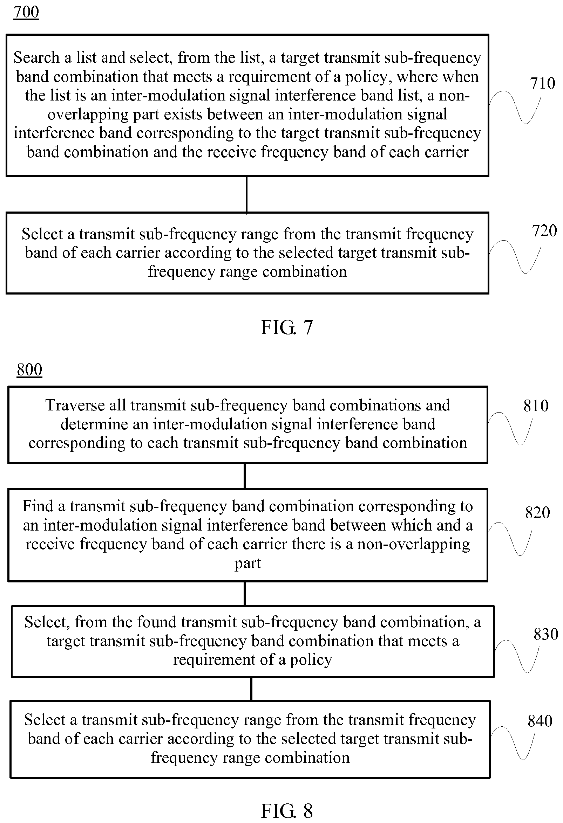

The foregoing method may be set in a radio transmit device in a form of software, so that the radio transmit device selects one transmit sub-frequency band combination, that is, selects a transmit sub-frequency band for each carrier. In addition, alternatively, each transmit sub-frequency band combination and its corresponding inter-modulation signal interference band or non-overlapping frequency range may be stored in the radio transmit device in advance in a form of a list, where the list is referred to as an inter-modulation signal interference band list or a non-overlapping frequency range list, so that the radio transmit device selects a suitable transmit sub-frequency band combination according to the list, that is, selects a transmit sub-frequency band for each carrier. That is, in an embodiment of the present invention, a list is stored in the radio transmit device, and the list is an inter-modulation signal interference band list or a non-overlapping frequency range list, where the inter-modulation signal interference band list includes multiple transmit sub-frequency band combinations and an inter-modulation signal interference band corresponding to each transmit sub-frequency band combination, and the non-overlapping frequency range list includes multiple transmit sub-frequency band combinations and an inter-modulation signal interference band corresponding to each transmit sub-frequency band combination. A transmit frequency band of each carrier includes at least two sub-frequency ranges, any combination of these sub-frequency ranges forms a transmit sub-frequency band of the carrier, and each transmit sub-frequency band combination includes one transmit sub-frequency band of each carrier. In this case, in the foregoing step S610, that is, a process in which the radio transmit device selects, from a transmit frequency band of each carrier, a transmit sub-frequency band for each carrier includes steps shown in FIG. 7:

S710. Search the foregoing list and select, from the list, a target transmit sub-frequency band combination that meets a requirement of a policy, where when the list is an inter-modulation signal interference band list, a non-overlapping part exists between an inter-modulation signal interference band corresponding to the target transmit sub-frequency band combination and the receive frequency band of each carrier.
S720. Select a transmit sub-frequency range from the transmit frequency band of each carrier according to the selected target transmit sub-frequency range combination.

When the foregoing list is prestored in the radio transmit device, during selection of the transmit sub-frequency band, the target transmit sub-frequency band combination can be found directly by means of table lookup, and then the transmit sub-frequency band is selected according to the target transmit sub-frequency band combination, that is, the transmit sub-frequency band combination is selected to perform transmission of a downlink signal. In this way, operation complexity of the radio transmit device can be simplified and implementation costs can be reduced.

A policy for selecting a target transmit sub-frequency band may be set as required. For example, according to a service requirement and the like, a transmit sub-frequency band combination that is most suitable for the service requirement may be selected; or a transmit sub-frequency band combination with highest uplink resource utilization may be selected; or a transmit sub-frequency band combination with highest downlink resource utilization may be selected. For example, when non-overlapping parts exist between inter-modulation signal interference bands corresponding to multiple transmit sub-frequency band combinations and the receive frequency band of each carrier; or when multiple transmit sub-frequency band combinations with non-overlapping frequency ranges exist, a transmit sub-frequency band combination corresponding to an inter-modulation signal interference band that has a largest non-overlapping part or a transmit sub-frequency band combination corresponding to a largest non-overlapping frequency range is selected as the target transmit sub-frequency band combination; and in this way, maximum uplink resource utilization can be achieved. For another example, when non-overlapping parts exist between inter-modulation signal interference bands corresponding to multiple transmit sub-frequency band combinations and the receive frequency band of each carrier; or when multiple transmit sub-frequency band combinations with non-overlapping frequency ranges exist, the target transmit sub-frequency band combination is selected according to a service traffic requirement; and in this way, the selection of the transmit sub-frequency band is most suitable for a current service requirement. For still another example, when non-overlapping parts exist between inter-modulation signal interference bands corresponding to multiple transmit sub-frequency band combinations and the receive frequency band of each carrier; or when multiple transmit sub-frequency band combinations with non-overlapping frequency ranges exist, the target transmit sub-frequency band combination is selected according to interference tolerance; and in this way, the selection of the transmit sub-frequency band can meet an interference tolerance requirement. Specifically, the policy may be selected as required, but is not used to limit the present application.

In addition, there may be more than one transmit sub-frequency band combination that meets a requirement of one policy. Therefore, a combination of these policies may be used to select an optimal transmit sub-frequency band combination. That is, a policy for selecting a target transmit sub-frequency band may include one or more of the following policies: uplink resource utilization maximization policy, service traffic requirement policy, and interference tolerance policy. The uplink resource utilization maximization policy requires that the non-overlapping part existing between the inter-modulation signal interference band corresponding to the target transmit sub-frequency band combination and the receive frequency band of each carrier be maximized, or requires that a non-overlapping frequency range corresponding to the target transmit sub-frequency band combination be maximized. The service traffic requirement policy requires that the transmit sub-frequency band of each carrier in the target transmit sub-frequency band combination meet a service traffic requirement. The interference tolerance policy requires that the non-overlapping part existing between the inter-modulation signal interference band corresponding to the target transmit sub-frequency band combination and the receive frequency band of each carrier be greater than or equal to a preset threshold, or requires that the non-overlapping frequency range corresponding to the target transmit sub-frequency band combination be greater than or equal to a preset threshold.

For example, a radio transmit device performs communication using a carrier C1 and a carrier C2, where the carrier C1 carries more downlink service traffic and C2 carries less downlink service traffic. In this case, a target transmit sub-frequency band combination may be selected from all transmit sub-frequency band combinations with non-overlapping frequency ranges, so that a transmit sub-frequency band of C1 occupies a transmit frequency band as much as possible to meet a downlink service traffic requirement. Certainly, the non-overlapping frequency range also needs to meet an uplink service traffic requirement at the same time. For another example, when downlink service traffic of C1 and C2 is little, in a case in which a downlink service requirement is met, a transmit sub-frequency band combination with a largest non-overlapping frequency range may be selected, so as to achieve maximum uplink resource utilization.

For another example, a target transmit sub-frequency band combination may be determined according to interference tolerance. The interference tolerance is a tolerable maximum bandwidth, of a receive frequency band, is occupied by an inter-modulation signal interference band, or a tolerable minimum non-overlapping frequency range. For example, a radio transmit device performs communication using a carrier C1 and a carrier C2; it is assumed that interference tolerance is a tolerable maximum bandwidth Q, of a receive frequency band, occupied by an inter-modulation signal interference band, and that Q1 is an overlapping part between an inter-modulation signal interference band generated by a transmit sub-frequency band combination and a receive frequency band of the carrier C1. If the overlapping part Q1 exceeds the interference tolerance Q of the receive frequency band of the carrier C1, that is, Q1 > Q, in this case, inter-modulation interference generated by the transmit sub-frequency band combination causes relatively severe interference to the receive frequency band of the carrier C1 and does not meet interference tolerance of the carrier C1, and another transmit sub-frequency band combination needs to be selected. It is assumed that interference tolerance is a tolerable minimum non-overlapping frequency range S, and that a non-overlapping part between an inter-modulation signal interference band generated by a transmit sub-frequency band combination and the receive frequency band of the carrier C1, that is, the non-overlapping frequency range, is S1. If the non-overlapping frequency range S1 is less than or equal to the interference tolerance S of the receive frequency band of the carrier C1, that is, S1 < S, in this case, inter-modulation interference generated by the transmit sub-frequency band combination causes relatively severe interference to the receive frequency band of the carrier C1 and does not meet interference tolerance of the carrier C1, and another transmit sub-frequency band combination needs to be selected. For a case in which the overlapping part Q1 or the non-overlapping frequency range S1 is equal to the interference tolerance, the transmit sub-frequency band combination may be selected or may not be selected, and no limitation is imposed herein. It should be understood that the interference tolerance may also be another metric parameter that can measure maximum inter-modulation interference incurred on the receive frequency band, and the present invention is not limited thereto.

The foregoing various policies for selecting a transmit sub-frequency band combination may be used separately or in combination, and when used in combination, these policies may be combined arbitrarily as required. For example, a transmit sub-frequency band combination with a largest non-overlapping frequency range may be selected from multiple transmit sub-frequency band combinations that meet interference tolerance; or a transmit sub-frequency band combination that meets a service traffic requirement may be selected from multiple transmit sub-frequency band combinations that meet interference tolerance; or a transmit sub-frequency band combination with a largest non-overlapping frequency range may be selected from multiple transmit sub-frequency band combinations that meet a service traffic requirement; or a transmit sub-frequency band combination with a largest non-overlapping frequency range may be selected from multiple transmit sub-frequency band combinations that meet interference tolerance and a service traffic requirement.

It should be noted that, during formulation of the foregoing list, all transmit sub-frequency band combinations may be set in the list, or only transmit sub-frequency band combinations with non-overlapping frequency ranges may be set. That is, the foregoing list may include all possible transmit sub-frequency band combinations or may include only some transmit sub-frequency band combinations with non-overlapping frequency ranges.

In addition, each carrier may be divided into multiple sub-frequency ranges in a form of equal division or unequal division, and at least one sub-frequency range is selected arbitrarily from each carrier to be combined with at least one arbitrary sub-frequency range in another carrier. After such combination, multiple transmit sub-frequency band combinations may be obtained, where each transmit sub-frequency band combination generates a corresponding inter-modulation signal interference band, and each transmit sub-frequency band combination is associated with its corresponding inter-modulation signal interference band or non-overlapping frequency range and is stored in a list, so that a radio transmit device performs selection of a transmit sub-frequency band according to the list. In addition, quantities of sub-frequency ranges of these carriers may be same or may be different, that is, the transmit frequency band of each carrier is divided into a same quantity of sub-frequency ranges or divided into a different quantity of sub-frequency ranges. Herein, no limitation is imposed.

Optionally, to simplify processing, as an embodiment of the present invention, the transmit frequency band of each carrier includes a same quantity of sub-frequency ranges and each of the sub-frequency ranges has a same bandwidth. For example, each of multiple carriers may be divided into N sub-frequency ranges with a same granularity, where N is an integer greater than 1.

Specifically, a transmit frequency band corresponding to each carrier of the multiple carriers is divided into N frequency ranges according to a same granularity. A smaller granularity indicates more transmit sub-frequency band combinations available for selection, and it is easier to find a transmit sub-frequency band combination that meets a requirement of a policy; however, more combinations indicate a higher complexity. Therefore, in specific implementation, a granularity may be selected as required. A transmit frequency band of a carrier may be divided by using, for example, a resource block (Resource Block, RB for short) as a minimum granularity, or may be divided according to another granularity; the present invention is not limited thereto. N sub-frequency ranges corresponding to each carrier can be combined with multiple sub-frequency ranges corresponding to all other carriers into different combinations and the different combinations are traversed to find a combination of frequency domain resources that can reduce inter-modulation interference, and then a target transmit sub-frequency band is determined according to a local policy or an actual requirement.

In addition to being implemented in a form of a list, the foregoing method can also be implemented directly in a radio transmit device. In this case, a process in which the radio transmit device selects, from a transmit frequency band of each carrier, a transmit sub-frequency band for the carrier includes steps shown in FIG. 8:

S810: Traverse all transmit sub-frequency band combinations and determine an inter-modulation signal interference band corresponding to each transmit sub-frequency band combination.

S820: Find a transmit sub-frequency band combination corresponding to an inter-modulation signal interference band between which and the receive frequency band of each carrier there is a non-overlapping part.

S830: Select, from the found transmit sub-frequency band combination, a target transmit sub-frequency band combination that meets a requirement of a policy.

S840: Select the transmit sub-frequency band from the transmit frequency band of each carrier according to the target transmit sub-frequency band combination.

Meanings about the transmit sub-frequency band combinations and the policy are the same as those in the foregoing embodiments, and details are not described herein again.

According to this embodiment of the present invention, characteristics of an inter-modulation product are fully utilized to provide a manner of joint scheduling and frequency domain resource staggering so that an inter-modulation interference band does not fall within a receive frequency band. In addition, for a frequency band that will be unavoidably interfered with by the inter-modulation product, a manner of no scheduling is used to resolve an inter-modulation interference problem. A frequency range of an inter-modulation interference signal changes as frequencies and bandwidths of carriers that generate inter-modulation change. Therefore, when downlink scheduling is being performed, suitable frequencies of transmit carriers and suitable bandwidths occupied by the transmit carriers are selected, so that a generated inter-modulation interference signal and a receive frequency band are staggered or the receive frequency band is occupied as little as possible, and uplink scheduling is performed using a frequency range not occupied by the inter-modulation interference signal during the uplink scheduling, thereby resolving an inter-modulation interference problem.

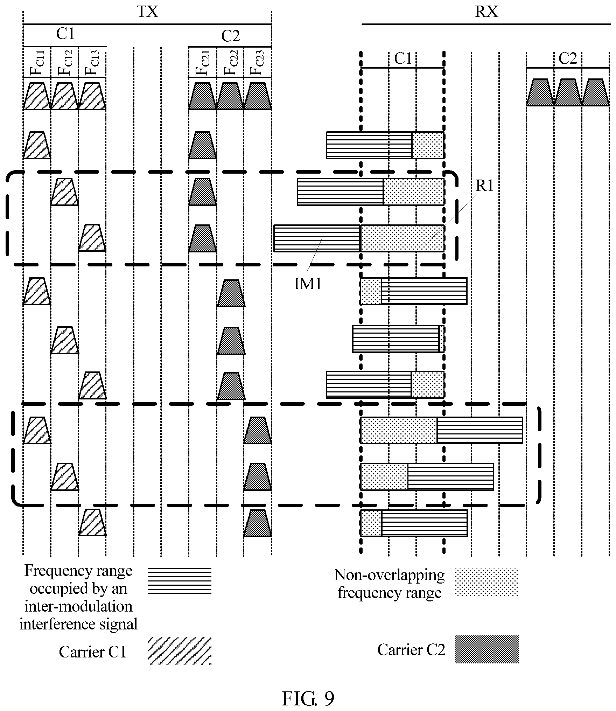

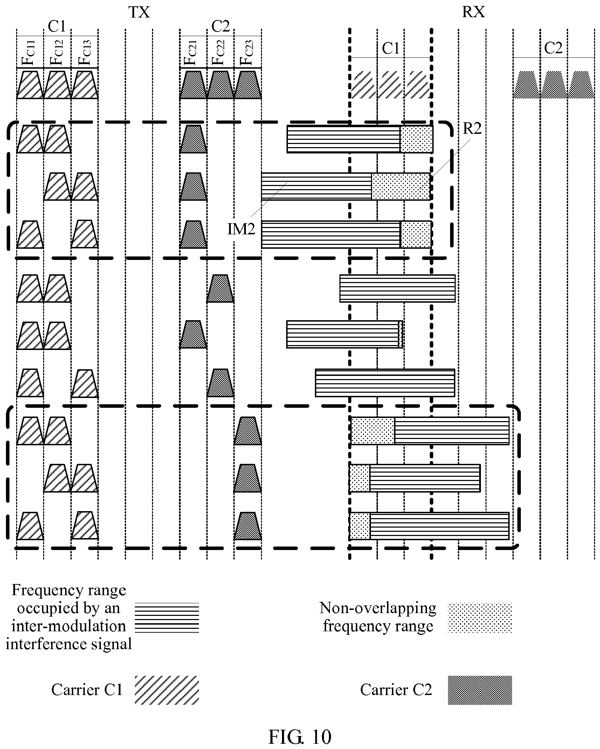

The following describes the foregoing scheduling method in detail with reference to FIG. 9 and FIG. 10. FIG. 9 and FIG. 10 provide description by using LTE 800 MHz, that is, a band 20 (Band20), as an example. Implementation of another communications system or another band is similar to this and details are not described herein. It is assumed that two carriers C1 and C2 exist, a transmit (TX) frequency band of the carrier C1 is 791 MHz to 801 MHz and a receive (RX) frequency band of the carrier C1 is 832 MHz to 842 MHz; and a transmit frequency band of the carrier C2 is 811 MHz to 821 MHz and a receive frequency band of the carrier C2 is 852 MHz to 862 MHz. An inter-modulation signal generated by the transmit frequency bands of the carriers C1 and C2 causes interference to the receive frequency band of C1.

To resolve the foregoing inter-modulation interference problem, in this embodiment, the carrier C1 is divided into three sub-frequency ranges $F_{C11}$, $F_{C12}$, and $F_{C13}$. A range of frequencies of $F_{C11}$ is 791 MHz to 794.33 MHz, a range of frequencies of $F_{C12}$ is 794.33 MHz to 797.66 MHz, and a range of frequencies of $F_{C13}$ is 797.66 MHz to 801 MHz. The carrier C2 is divided into three sub-frequency ranges $F_{C21}$, $F_{C22}$, and $F_{C23}$. A range of frequencies of $F_{C21}$ is 811 MHz to 814.33 MHz, a range of frequencies of $F_{C12}$ is 814.33 MHz to 817.66 MHz, and a range of frequencies of $F_{C13}$ is 817.66 MHz to 821 MHz.

Combinations of the sub-frequency ranges $F_{C11}$, $F_{C12}$, and $F_{C13}$ of the carrier C1 include $[F_{C11}]$, $[F_{C12}]$, $[F_{C13}]$, $[F_{C11},F_{C12}]$, $[F_{C11},F_{C13}]$, $[F_{C12},F_{C13}]$, and $[F_{C11},F_{C12},F_{C13}]$; combinations of the sub-frequency ranges $F_{C21}$, $F_{C22}$, and $F_{C23}$ of the carrier C2 include $[F_{C21}]$, $[F_{C22}]$, $[F_{C23}]$, $[F_{C21},F_{C22}]$, $[F_{C21},F_{C23}]$, $[Fc22,Fc23]$, and $[F_{C21},F_{C22},F_{C23}]$. In addition, any one of the combinations of the sub-frequency ranges $F_{C11}$, $F_{C12}$, and $F_{C13}$ of the carrier C1 and any one of the combinations of the sub-frequency ranges $F_{C21}$, $F_{C22}$, and $F_{C23}$ of the carrier C2 form a transmit sub-frequency band combination of the carriers C1 and C2. A frequency range occupied by an inter-modulation signal generated by each transmit sub-frequency band combination may be obtained through calculation according to the foregoing formulas (1)-(4), so that an inter-modulation signal interference band may be learned, and a non-overlapping part between the frequency range occupied by the inter-modulation signal generated by each transmit sub-frequency band combination and a receive frequency band of each carrier, that is, a non-overlapping frequency range, may also be obtained. In this way, a non-overlapping frequency range may be selected for performing uplink scheduling, which prevents inter-modulation interference.

As shown in FIG. 9, a radio transmit device selects one sub-frequency range separately from the carrier C1 and the carrier C2 to form a transmit sub-frequency band combination, and when different transmit sub-frequency band combinations are scheduled, generated inter-modulation interference signals occupy different frequency ranges, and overlapping parts between the frequency ranges occupied by the inter-modulation interference signals and the receive frequency band of each carrier are different. For example, when the sub-frequency range $F_{C13}$ in the transmit frequency band of the carrier C1 and the sub-frequency range $F_{C21}$ of the carrier C2 are scheduled, an overlapping part between a generated inter-modulation interference signal and the receive frequency bands of the carrier C1 and the carrier C2 is the least. Maximum uplink resource utilization can be achieved by selecting this transmit sub-frequency band combination. In addition, alternatively, a relatively large non-overlapping frequency range may be obtained by selecting the sub-frequency range $F_{C12}$ in the transmit frequency band of the carrier C1 and the sub-frequency range $F_{C11}$ or $F_{C12}$ of the carrier C2 (as shown in the dashed box in FIG. 9). Therefore, the three transmit sub-frequency band combinations may also be selected. In this case, downlink resource utilization of the two carriers C1 and C2 is only 1/3. Therefore, this selection is applicable to a scenario in which downlink service traffic is light and a downlink service requirement can be met using only 1/3 of downlink resources. When downlink service traffic is relatively heavy, downlink resource utilization can be increased. As shown in FIG. 10, a radio transmit device selects two sub-frequency ranges from the carrier C1 and selects one sub-frequency range from the carrier C2 to form a transmit sub-frequency band combination, and when different transmit sub-frequency band combinations are scheduled, generated inter-modulation interference signals occupy different frequency ranges, and overlapping parts between the frequency ranges occupied by the inter-modulation interference signals and the receive frequency band of each carrier are different. When a combination of the sub-frequency range $F_{C12}$ and the sub-frequency range $F_{C13}$ in the transmit frequency band of the carrier C1 and the sub-frequency range $F_{C21}$ of the carrier C2 is scheduled, an overlapping part between a frequency range occupied by a generated inter-modulation interference signal and the receive frequency band of the carrier C1 is the least, that is, a non-overlapping frequency range is largest. Therefore, this transmit sub-frequency band combination may be preferably used as a current transmit frequency range and further, uplink scheduling is performed using the non-overlapping frequency range. Certainly, other transmit sub-frequency band combinations shown in the dashed boxes may also be selected for use, but uplink resource utilization of the other transmit sub-frequency band combinations does not reach the largest.

In the foregoing embodiments, downlink scheduling is implemented by selecting a transmit sub-frequency band for each carrier, and at the same time, available uplink scheduling resources are determined. Based on this, alternatively the reverse may be performed, that is, uplink scheduling resources are selected first and then a transmit sub-frequency band that may be selected for use on each carrier is found based on the uplink scheduling resources. The following provides description with reference to the accompanying drawings.

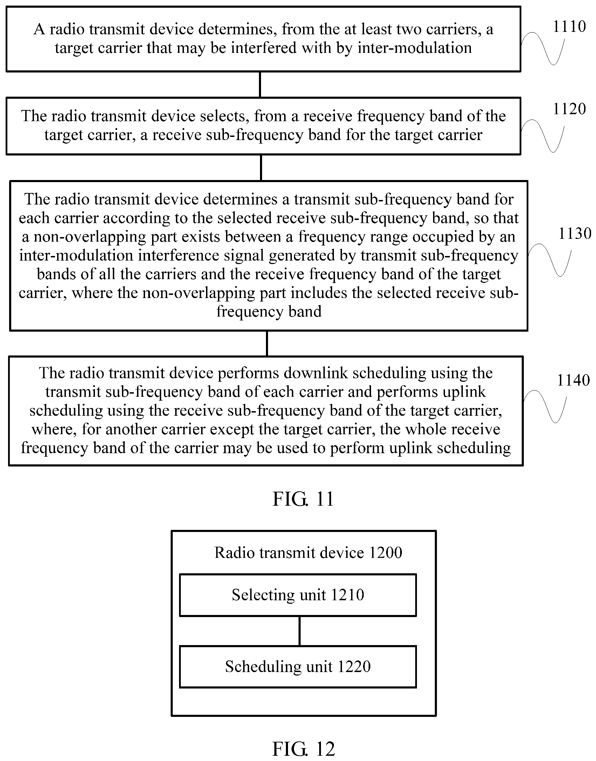

Referring to FIG. 11, FIG. 11 is a flowchart of a scheduling method according to an embodiment of the present invention. The scheduling method is executed by a radio transmit device and used in a communications system that performs communication using at least two carriers, where each carrier includes a transmit frequency band and a receive frequency band. It should be understood that the radio transmit device is a device that can transmit a radio frequency signal, for example, may be a radio frequency section, a radio access point, or a radio remote unit (Radio Remote Unit, RRU) of a base station; and the present invention is not limited thereto. The base station herein refers to a device that connects a terminal to a wireless network, including a base station in various communications standards, for example, an evolved Node B (evolved Node B, eNB), a radio network controller (radio network controller, RNC), a Node B (Node B, NB), a base station controller (Base Station Controller, BSC), a base transceiver station (Base Transceiver Station, BTS), or a home base station (for example, Home evolved NodeB, or Home Node B, HNB). It should be further understood that each carrier corresponds to one transmit frequency band, or each carrier occupies one transmit bandwidth at one frequency; in addition, each carrier corresponds to one receive frequency band, or each carrier occupies one receive bandwidth at one frequency; transmit frequency bands between any two carriers do not overlap; and receive frequency bands between any two carriers also do not overlap. In addition, a transmit frequency band and a receive frequency band appear in a pair. When a transmit frequency band is determined, a receive frequency band is also determined.

As shown in FIG. 11, the scheduling method includes the following steps:

S1110. The radio transmit device determines, from the at least two carriers, a target carrier that may be interfered with by inter-modulation.

S1120. The radio transmit device selects, from a receive frequency band of the target carrier, a receive sub-frequency band for the target carrier.

S1130. The radio transmit device determines a transmit sub-frequency band for each carrier according to the selected receive sub-frequency band, so that a non-overlapping part exists between a frequency range occupied by an inter-modulation interference signal generated by transmit sub-frequency bands of all the carriers and the receive frequency band of the target carrier, where the non-overlapping part includes the selected receive sub-frequency band.

S1140. The radio transmit device performs downlink scheduling using the transmit sub-frequency band of each carrier and performs uplink scheduling using the receive sub-frequency band of the target carrier. For another carrier except the target carrier, the whole receive frequency band of the carrier may be used to perform uplink scheduling.

It should be noted that the foregoing implementation is the same as that in the foregoing embodiments, and a list provided in the foregoing embodiments may be set in the radio transmit device. When this list is used, a similar policy may be used to select the receive sub-frequency band of the target carrier. For example, the foregoing step S1120 includes the following steps: selecting, from the list, a target inter-modulation signal interference band that meets a requirement of a policy, where a non-overlapping part exists between the selected target inter-modulation signal interference band and the receive frequency band of the target carrier; and using the non-overlapping part existing between the selected target inter-modulation signal interference band and the receive frequency band of the target carrier as the receive sub-frequency band selected for the target carrier. Alternatively, the foregoing step S1120 includes the following steps: selecting, from the list, a target non-overlapping frequency range that meets a requirement of a policy; and using the selected target non-overlapping frequency range as the receive sub-frequency band selected for the target carrier.

In addition, in terms of policy use, an inter-modulation signal interference band that meets interference tolerance or a non-overlapping frequency range that meets interference tolerance may be selected from the list according to an interference tolerance policy, that is, an inter-modulation signal interference band or a non-overlapping frequency range is selected, where the non-overlapping part (that is, the non-overlapping frequency range) existing between the inter-modulation signal interference band and the receive frequency band of the target carrier meets a preset threshold requirement. For example, the non-overlapping frequency ranges shown in the dashed box in FIG. 9 or FIG. 10 are selected. Then, when there is no other policy requirement, any one of these inter-modulation signal interference bands or non-overlapping frequency ranges may be selected as the target inter-modulation signal interference band or the target non-overlapping frequency range. When there is another policy requirement, for example, a measurement requirement for maximum uplink resource utilization, the inter-modulation signal interference band IM1 shown in FIG. 9 is selected as the target inter-modulation signal interference band, or the non-overlapping frequency range R1 is selected as the target non-overlapping frequency range. For another example, when there is a downlink service traffic requirement in addition to an uplink resource utilization requirement, for example, relatively heavy downlink service traffic is required for C1, the inter-modulation signal interference band IM2 in FIG. 10 may be selected as the target inter-modulation signal interference band, or the non-overlapping frequency range R2 is selected as the target non-overlapping frequency range.

In this way, a transmit sub-frequency band combination corresponding to the receive sub-frequency band may be determined. Then, selection of uplink scheduling resources and selection of downlink scheduling resources are both complete and communication can be performed. Alternatively, the foregoing method can also be implemented directly in a radio transmit device. In this case, the radio transmit device may traverse all of the transmit sub-frequency band combinations and find a target inter-modulation signal interference band therein. In this case, the foregoing method further includes the following steps: traversing all transmit sub-frequency band combinations and determining an inter-modulation signal interference band corresponding to each transmit sub-frequency band combination, where each transmit sub-frequency band combination includes one transmit sub-frequency band of each carrier. In addition, the foregoing step S112 includes the following steps: selecting, from inter-modulation signal interference bands corresponding to all the transmit sub-frequency band combinations, a target inter-modulation signal interference band that meets a requirement of a policy, where a non-overlapping part exists between the selected target inter-modulation signal interference band and the receive frequency band of the target carrier; and using the non-overlapping part existing between the selected target inter-modulation signal interference band and the receive frequency band of the target carrier as the receive sub-frequency band selected for the target carrier.

For the transmit sub-frequency band combinations and the policy and the like, reference may be made to the foregoing embodiments and details are not described herein again.

In addition, a receive frequency band of a carrier may be divided into at least two sub-frequency ranges, where the division is the same as the foregoing division of a transmit frequency band, which may be equal division or may be unequal division, and may be that only an interfered carrier is divided. Then, one or more sub-frequency ranges may be selected as a receive sub-frequency band according to interference tolerance. Then, a non-overlapping frequency range that includes the receive sub-frequency band is selected according to the foregoing method, so that a transmit sub-frequency band combination is determined according to the non-overlapping frequency range.

FIG. 5 to FIG. 11 describe in detail a method for reducing inter-modulation interference. The following describes in detail a device for reducing inter-modulation interference according to an embodiment of the present invention with reference to FIG. 12 to FIG. 15.

FIG. 12 is a schematic block diagram of a radio transmit device according to an embodiment of the present invention. As shown in FIG. 12, a device 1200 is used in a communications system that performs communication using at least two carriers, where each carrier includes a transmit frequency band and a receive frequency band and the device 1200 includes:

a selecting unit 1210, configured to select, from the transmit frequency band of each carrier, a transmit sub-frequency band for each carrier, where there is at least one transmit sub-frequency band that is a proper subset of a transmit frequency band in which the at least one transmit sub-frequency band is located, so that a non-overlapping part exists between a frequency range occupied by an inter-modulation interference signal generated by all transmit sub-frequency bands and the receive frequency band of each carrier, where the non-overlapping part is a non-overlapping frequency range and the frequency range occupied by the inter-modulation interference signal is an inter-modulation signal interference band; and

a scheduling unit 1220, where the scheduling unit 1220 is configured to perform downlink scheduling using the transmit sub-frequency band of each carrier and perform uplink scheduling using the non-overlapping frequency range.

According to this embodiment of the present invention, characteristics of an inter-modulation product are fully utilized to provide a manner of joint scheduling and frequency domain resource staggering so that an inter-modulation interference band does not fall within a receive frequency band as far as possible. In addition, for a frequency band that will be unavoidably interfered with by the inter-modulation product, a manner of no scheduling is used to resolve an inter-modulation interference problem. A frequency range of an inter-modulation interference signal changes as frequencies and bandwidths of carriers that generate inter-modulation change. Therefore, when downlink scheduling is being performed, suitable frequencies of transmit carriers and suitable bandwidths occupied by the transmit carriers are selected, so that a generated inter-modulation interference signal and a receive frequency band are staggered or the receive frequency band is occupied as little as possible, and uplink scheduling is performed using a frequency range not occupied by the inter-modulation interference signal during the uplink scheduling, thereby resolving an inter-modulation interference problem.

It should be noted that the selecting unit in this embodiment may be implemented by a processor of the radio transmit device, which may be an independently disposed processor, or may be integrated into a processor of the radio transmit device for implementation. In addition, alternatively, the selecting unit may be stored in a form of program code in a memory of the radio transmit device, where the program code is invoked by a processor of the radio transmit device to execute a function of the foregoing selecting unit. The scheduling unit is implemented in a same way as the selecting unit and may be integrated with the selecting unit or may be implemented independently. The processor described herein may be a central processing unit (Central Processing Unit, CPU), or an application specific integrated circuit (Application Specific Integrated Circuit, ASIC), or may be configured as one or more integrated circuits for implementing this embodiment of the present invention.

Optionally, as an embodiment of the present invention, the non-overlapping frequency range between the frequency range occupied by the inter-modulation interference signal and the receive frequency band of each carrier is all or a part of frequency ranges of the receive frequency band of the carrier.

Optionally, as an embodiment of the present invention, a list is stored in the radio transmit device, and the list includes multiple transmit sub-frequency band combinations and an inter-modulation signal interference band corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the selecting unit 1210 is specifically configured to: select, from the list, a target transmit sub-frequency band combination that meets a requirement of a policy, where a non-overlapping part exists between an inter-modulation signal interference band corresponding to the target transmit sub-frequency band combination and the receive frequency band of each carrier; and select the transmit sub-frequency band from the transmit frequency band of each carrier according to the target transmit sub-frequency band combination.

Optionally, as an embodiment of the present invention, the policy includes one or more of the following policies: uplink resource utilization maximization policy, service traffic requirement policy, and interference tolerance policy, where: the uplink resource utilization maximization policy requires that the non-overlapping part existing between the inter-modulation signal interference band corresponding to the target transmit sub-frequency band combination and the receive frequency band of each carrier be maximized; the service traffic requirement policy requires that the transmit sub-frequency band of each carrier in the target transmit sub-frequency band combination meet a service traffic requirement; and the interference tolerance policy requires that the non-overlapping part existing between the inter-modulation signal interference band corresponding to the target transmit sub-frequency band combination and the receive frequency band of each carrier be greater than or equal to a preset threshold.

Optionally, as an embodiment of the present invention, a list is stored in the radio transmit device 1200, and the list includes multiple transmit sub-frequency band combinations and a non-overlapping frequency range corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the selecting unit 1210 is specifically configured to: select, from the list, a target transmit sub-frequency band combination that meets a requirement of a policy; and select the transmit sub-frequency band from the transmit frequency band of each carrier according to the target transmit sub-frequency band combination.

Optionally, as an embodiment of the present invention, the transmit frequency band of each carrier includes a same quantity of sub-frequency ranges and each of the sub-frequency ranges has a same bandwidth.

Optionally, as an embodiment of the present invention, the policy includes one or more of the following policies: uplink resource utilization maximization policy, service traffic requirement policy, and interference tolerance policy, where: the uplink resource utilization maximization policy requires that the non-overlapping frequency range corresponding to the target transmit sub-frequency band combination be maximized; the service traffic requirement policy requires that the transmit sub-frequency band of each carrier in the target transmit sub-frequency band combination meet a service traffic requirement; and the interference tolerance policy requires that the non-overlapping frequency range corresponding to the target transmit sub-frequency band combination be greater than or equal to a preset threshold.

Optionally, as an embodiment of the present invention, the transmit frequency band of each carrier includes a same quantity of sub-frequency ranges and each of the sub-frequency ranges has a same bandwidth.

Optionally, as an embodiment of the present invention, the transmit frequency band of each carrier includes at least two sub-frequency ranges; for each carrier, any combination of the at least two sub-frequency ranges is a transmit sub-frequency band of the carrier; and the selecting unit 1210 is specifically configured to: traverse all transmit sub-frequency band combinations and determine an inter-modulation signal interference band corresponding to each transmit sub-frequency band combination, where each transmit sub-frequency band combination includes one transmit sub-frequency band of each carrier; find a transmit sub-frequency band combination corresponding to an inter-modulation signal interference band between which and the receive frequency band of each carrier there is a non-overlapping part; select, from the found transmit sub-frequency band combination, a target transmit sub-frequency band combination that meets a requirement of a policy; and select the transmit sub-frequency band from the transmit frequency band of each carrier according to the target transmit sub-frequency band combination.

Optionally, as an embodiment of the present invention, the policy includes one or more of the following policies: uplink resource utilization maximization policy, service traffic requirement policy, and interference tolerance policy, where: the uplink resource utilization maximization policy requires that the non-overlapping part existing between the inter-modulation signal interference band corresponding to the target transmit sub-frequency band combination and the receive frequency band of each carrier be maximized, or requires that a non-overlapping frequency range corresponding to the target transmit sub-frequency band combination be maximized; the service traffic requirement policy requires that the transmit sub-frequency band of each carrier in the target transmit sub-frequency band combination meet a service traffic requirement; and the interference tolerance policy requires that the non-overlapping part existing between the inter-modulation signal interference band corresponding to the target transmit sub-frequency band combination and the receive frequency band of each carrier be greater than or equal to a preset threshold, or requires that the non-overlapping frequency range corresponding to the target transmit sub-frequency band combination be greater than or equal to a preset threshold.

According to this embodiment of the present invention, characteristics of an inter-modulation product are fully utilized to provide a manner of joint scheduling and frequency domain resource staggering so that an inter-modulation interference band does not fall within a receive frequency band as far as possible. In addition, for a frequency band that will be unavoidably interfered with by the inter-modulation product, a manner of no scheduling is used to resolve an inter-modulation interference problem. A frequency range of an inter-modulation interference signal changes as frequencies and bandwidths of carriers that generate inter-modulation change. Therefore, when downlink scheduling is being performed, suitable frequencies of transmit carriers and suitable bandwidths occupied by the transmit carriers are selected, so that a generated inter-modulation interference signal and a receive frequency band are staggered or the receive frequency band is occupied as little as possible, and uplink scheduling is performed using a frequency range not occupied by the inter-modulation interference signal during the uplink scheduling, thereby resolving an inter-modulation interference problem.

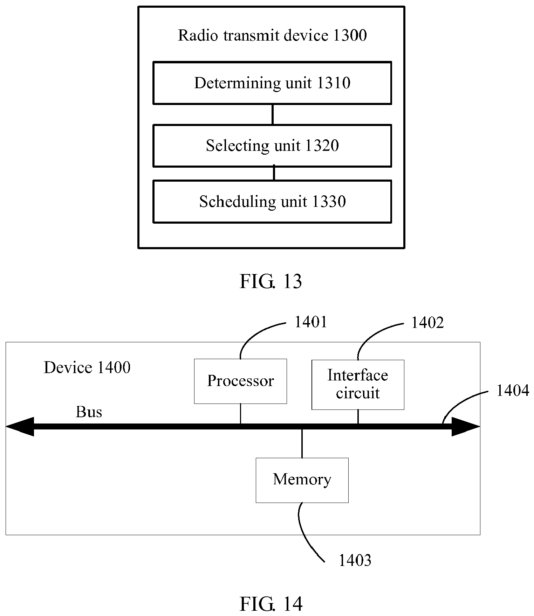

FIG. 13 is a schematic block diagram of a radio transmit device according to the present invention. As shown in FIG. 13, a device 1300 is used in a communications system that performs communication using at least two carriers, where each carrier includes a transmit frequency band and a receive frequency band and the device 1300 includes:

a determining unit 1310, configured to determine, from the at least two carriers, a target carrier that may be interfered with by inter-modulation;

a selecting unit 1320, configured to select, from a receive frequency band of the target carrier, a receive sub-frequency band for the target carrier, where

the determining unit 1310 is further configured to determine a transmit sub-frequency band for each carrier according to the selected receive sub-frequency band, so that a non-overlapping part exists between a frequency range occupied by an inter-modulation interference signal generated by the transmit sub-frequency bands of the at least two carriers and the receive frequency band of the target carrier, where the non-overlapping part includes the selected receive sub-frequency band; and

a scheduling unit 1330, configured to perform downlink scheduling using the transmit sub-frequency band of each carrier and perform uplink scheduling using the receive sub-frequency band.

It should be noted that the determining unit in this embodiment may be implemented by a processor of the radio transmit device, which may be an independently disposed processor, or may be integrated into a processor of the radio transmit device for implementation. In addition, alternatively, the determining unit may be stored in a form of program code in a memory of the radio transmit device, where the program code is invoked by a processor of the radio transmit device to execute a function of the foregoing determining unit. The selecting unit and the scheduling unit are implemented in a same way as the determining unit, and all or some of these units may be integrated together or these units may be implemented independently. The processor described herein may be a central processing unit (Central Processing Unit, CPU), or an application specific integrated circuit (Application Specific Integrated Circuit, ASIC), or may be configured as one or more integrated circuits for implementing this embodiment of the present invention.

It should be noted that the foregoing implementation is the same as that in the foregoing embodiments, and a list provided in the foregoing embodiments may be set in the radio transmit device. When this list is used, a similar policy may be used to select the receive sub-frequency band of the target carrier. For example, the foregoing selecting unit 1320 is specifically configured to: select, from the list, a target inter-modulation signal interference band that meets a requirement of a policy, where a non-overlapping part exists between the selected target inter-modulation signal interference band and the receive frequency band of the target carrier; and use the non-overlapping part existing between the selected target inter-modulation signal interference band and the receive frequency band of the target carrier as the receive sub-frequency band selected for the target carrier. Alternatively, the foregoing selecting unit 1320 is specifically configured to: select, from the list, a target non-overlapping frequency range that meets a requirement of a policy; and use the selected target non-overlapping frequency range as the receive sub-frequency band selected for the target carrier.

In addition, in terms of policy use, an inter-modulation signal interference band that meets interference tolerance or a non-overlapping frequency range that meets interference tolerance may be selected from the list according to an interference tolerance policy, that is, an inter-modulation signal interference band or a non-overlapping frequency range is selected, where the non-overlapping part (that is, the non-overlapping frequency range) existing between the inter-modulation signal interference band and the receive frequency band of the target carrier meets a preset threshold requirement. For example, the non-overlapping frequency ranges shown in the dashed box in FIG. 9 or FIG. 10 are selected. Then, when there is no other policy requirement, any one of these inter-modulation signal interference bands or non-overlapping frequency ranges may be selected as the target inter-modulation signal interference band or the target non-overlapping frequency range. When there is another policy requirement, for example, a measurement requirement for maximum uplink resource utilization, the inter-modulation signal interference band IM1 shown in FIG. 9 is selected as the target inter-modulation signal interference band, or the non-overlapping frequency range R1 is selected as the target non-overlapping frequency range. For another example, when there is a downlink service traffic requirement in addition to an uplink resource utilization requirement, for example, relatively heavy downlink service traffic is required for C1, the inter-modulation signal interference band IM2 in FIG. 10 may be selected as the target inter-modulation signal interference band, or the non-overlapping frequency range R2 is selected as the target non-overlapping frequency range.

In this way, the determining unit 1310 may determine a transmit sub-frequency band combination corresponding to the receive sub-frequency band. Then, selection of uplink scheduling resources and selection of downlink scheduling resources are both complete and communication can be performed. Alternatively, the radio transmit device 1300 may traverse all of the transmit sub-frequency band combinations and find a target inter-modulation signal interference band therein. In this case, the selecting unit is specifically configured to perform the following steps: traversing all transmit sub-frequency band combinations and determining an inter-modulation signal interference band corresponding to each transmit sub-frequency band combination, where each transmit sub-frequency band combination includes one transmit sub-frequency band of each carrier; selecting, from inter-modulation signal interference bands corresponding to all the transmit sub-frequency band combinations, a target inter-modulation signal interference band that meets a requirement of a policy, where a non-overlapping part exists between the selected target inter-modulation signal interference band and the receive frequency band of the target carrier; and using the non-overlapping part existing between the selected target inter-modulation signal interference band and the receive frequency band of the target carrier as the receive sub-frequency band selected for the target carrier.

For the transmit sub-frequency band combinations and the policy and the like, reference may be made to the foregoing embodiments and details are not described herein again.

In addition, a receive frequency band of a carrier may be divided into at least two sub-frequency ranges, where the division is the same as the foregoing division of a transmit frequency band, which may be equal division or may be unequal division, and may be that only an interfered carrier is divided. Then, one or more sub-frequency ranges may be selected as a receive sub-frequency band according to interference tolerance. Then, a non-overlapping frequency range that includes the receive sub-frequency band is selected according to the foregoing method, so that a transmit sub-frequency band combination is determined according to the non-overlapping frequency range.

According to this embodiment of the present invention, characteristics of an inter-modulation product are fully utilized to provide a manner of joint scheduling and frequency domain resource staggering so that an inter-modulation interference band does not fall within a receive frequency band as far as possible. In addition, for a frequency band that will be unavoidably interfered with by the inter-modulation product, a manner of no scheduling is used to resolve an inter-modulation interference problem. A frequency range of an inter-modulation interference signal changes as frequencies and bandwidths of carriers that generate inter-modulation change. Therefore, when downlink scheduling is being performed, suitable frequencies of transmit carriers and suitable bandwidths occupied by the transmit carriers are selected, so that a generated inter-modulation interference signal and a receive frequency band are staggered or the receive frequency band is occupied as little as possible, and uplink scheduling is performed using a frequency range not occupied by the inter-modulation interference signal during the uplink scheduling, thereby resolving an inter-modulation interference problem. FIG. 14 is a schematic block diagram of a radio transmit device according to another embodiment of the present invention. As shown in FIG. 14, the radio transmit device 1400 includes a processor 1401 and an interface circuit 1402. FIG. 14 further shows a memory 1403 and a bus 1404. The processor 1401, the interface circuit 1402, and the memory 1403 are connected and complete mutual communication by using the bus 1404. The processor 1401 is configured to select, from a transmit frequency band of each carrier, a transmit sub-frequency band for each carrier, where there is at least one transmit sub-frequency band that is a proper subset of a transmit frequency band in which the at least one transmit sub-frequency band is located, so that a non-overlapping part exists between a frequency range occupied by an inter-modulation interference signal generated by all transmit sub-frequency bands and a receive frequency band of each carrier, where the non-overlapping part is a non-overlapping frequency range and the frequency range occupied by the inter-modulation interference signal is an inter-modulation signal interference band. In addition, the processor 1401 is further configured to, through the interface circuit 1402, perform downlink scheduling using the transmit sub-frequency bands and perform uplink scheduling using the non-overlapping frequency range.

It should be noted that the processor 1401 herein may be one processor or may be a collective term of multiple processing elements. For example, the processor may be a central processing unit (Central Processing Unit, CPU), or an application specific integrated circuit (Application Specific Integrated Circuit, ASIC), or may be configured as one or more integrated circuits for implementing this embodiment of the present invention, for example, one or more microprocessors (Digital Signal Processors, DSPs) or one or more field programmable gate arrays (Field Programmable Gate Arrays, FPGAs).

The memory 1403 may be one storage apparatus or may be a collective term of multiple storage elements, and is configured to store executable program code, or a parameter, data, and the like that are required for running an access network management device. In addition, the memory 1403 may include a random access memory (RAM), or may include a non-volatile memory (non-volatile memory), for example, a disk memory or a flash (Flash).

The bus 1404 may be an Industry Standard Architecture (Industry Standard Architecture, ISA) bus, a Peripheral Component Interconnect (Peripheral Component, PCI) bus, or an Extended Industry Standard Architecture (Extended Industry Standard Architecture, EISA) bus, or the like. The bus 1404 may be classified into an address bus, a data bus, a control bus, and the like. For ease of description, in FIG. 14, the bus is represented by only one bold line, but this does not mean that there is only one bus or one type of bus.

According to this embodiment of the present invention, characteristics of an inter-modulation product are fully utilized to provide a manner of joint scheduling and frequency domain resource staggering so that an inter-modulation interference band does not fall within a receive frequency band as far as possible. In addition, for a frequency band that will be unavoidably interfered with by the inter-modulation product, a manner of no scheduling is used to resolve an inter-modulation interference problem. A frequency range of an inter-modulation interference signal changes as frequencies and bandwidths of carriers that generate inter-modulation change. Therefore, when downlink scheduling is being performed, suitable frequencies of transmit carriers and suitable bandwidths occupied by the transmit carriers are selected, so that a generated inter-modulation interference signal and a receive frequency band are staggered or the receive frequency band is occupied as little as possible, and uplink scheduling is performed using a frequency range not occupied by the inter-modulation interference signal during the uplink scheduling, thereby resolving an inter-modulation interference problem.

Optionally, as an embodiment of the present invention, the non-overlapping frequency range between the frequency range occupied by the inter-modulation interference signal and the receive frequency band of each carrier is all or a part of frequency ranges of the receive frequency band of the carrier.

Optionally, as an embodiment of the present invention, a list is stored in the memory 1403 and the list includes multiple transmit sub-frequency band combinations and an inter-modulation signal interference band corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the processor 1401 is specifically configured to: select, from the list, a target transmit sub-frequency band combination that meets a requirement of a policy, where a non-overlapping part exists between an inter-modulation signal interference band corresponding to the target transmit sub-frequency band combination and the receive frequency band of each carrier; and select the transmit sub-frequency band from the transmit frequency band of each carrier according to the target transmit sub-frequency band combination.

Optionally, as an embodiment of the present invention, the policy includes one or more of the following policies: uplink resource utilization maximization policy, service traffic requirement policy, and interference tolerance policy, where: the uplink resource utilization maximization policy requires that the non-overlapping part existing between the inter-modulation signal interference band corresponding to the target transmit sub-frequency band combination and the receive frequency band of each carrier be maximized; the service traffic requirement policy requires that the transmit sub-frequency band of each carrier in the target transmit sub-frequency band combination meet a service traffic requirement; and the interference tolerance policy requires that the non-overlapping part existing between the inter-modulation signal interference band corresponding to the target transmit sub-frequency band combination and the receive frequency band of each carrier be greater than or equal to a preset threshold.

Optionally, as an embodiment of the present invention, a list is stored in the memory 1403 and the list includes multiple transmit sub-frequency band combinations and a non-overlapping frequency range corresponding to each transmit sub-frequency band combination, where the transmit frequency band of each carrier includes at least two sub-frequency ranges, any combination of the at least two sub-frequency ranges is a transmit sub-frequency band of the carrier, each transmit sub-frequency band combination includes one transmit sub-frequency band of each carrier, and the processor 1401 is specifically configured to: select, from the list, a target transmit sub-frequency band combination that meets a requirement of a policy; and select the transmit sub-frequency band from the transmit frequency band of each carrier according to the target transmit sub-frequency band combination.

Optionally, as an embodiment of the present invention, the transmit frequency band of each carrier includes a same quantity of sub-frequency ranges and each of the sub-frequency ranges has a same bandwidth.

Optionally, as an embodiment of the present invention, the policy includes one or more of the following policies: uplink resource utilization maximization policy, service traffic requirement policy, and interference tolerance policy, where: the uplink resource utilization maximization policy requires that the non-overlapping frequency range corresponding to the target transmit sub-frequency band combination be maximized; the service traffic requirement policy requires that the transmit sub-frequency band of each carrier in the target transmit sub-frequency band combination meet a service traffic requirement; and the interference tolerance policy requires that the non-overlapping frequency range corresponding to the target transmit sub-frequency band combination be greater than or equal to a preset threshold.

Optionally, as an embodiment of the present invention, the transmit frequency band of each carrier includes a same quantity of sub-frequency ranges and each of the sub-frequency ranges has a same bandwidth.

Optionally, as an embodiment of the present invention, the transmit frequency band of each carrier includes at least two sub-frequency ranges; for each carrier, any combination of the at least two sub-frequency ranges is a transmit sub-frequency band of the carrier; and the processor 1401 is specifically configured to: traverse all transmit sub-frequency band combinations and determine an inter-modulation signal interference band corresponding to each transmit sub-frequency band combination, where each transmit sub-frequency band combination includes one transmit sub-frequency band of each carrier; find a transmit sub-frequency band combination corresponding to an inter-modulation signal interference band between which and the receive frequency band of each carrier there is a non-overlapping part; select, from the found transmit sub-frequency band combination, a target transmit sub-frequency band combination that meets a requirement of a policy; and select the transmit sub-frequency band from the transmit frequency band of each carrier according to the target transmit sub-frequency band combination.

Optionally, as an embodiment of the present invention, the policy includes one or more of the following policies: uplink resource utilization maximization policy, service traffic requirement policy, and interference tolerance policy, where: the uplink resource utilization maximization policy requires that the non-overlapping part existing between the inter-modulation signal interference band corresponding to the target transmit sub-frequency band combination and the receive frequency band of each carrier be maximized, or requires that a non-overlapping frequency range corresponding to the target transmit sub-frequency band combination be maximized; the service traffic requirement policy requires that the transmit sub-frequency band of each carrier in the target transmit sub-frequency band combination meet a service traffic requirement; and the interference tolerance policy requires that the non-overlapping part existing between the inter-modulation signal interference band corresponding to the target transmit sub-frequency band combination and the receive frequency band of each carrier be greater than or equal to a preset threshold, or requires that the non-overlapping frequency range corresponding to the target transmit sub-frequency band combination be greater than or equal to a preset threshold.

According to this embodiment of the present invention, characteristics of an inter-modulation product are fully utilized to provide a manner of joint scheduling and frequency domain resource staggering so that an inter-modulation interference band does not fall within a receive frequency band as far as possible. In addition, for a frequency band that will be unavoidably interfered with by the inter-modulation product, a manner of no scheduling is used to resolve an inter-modulation interference problem. A frequency range of an inter-modulation interference signal changes as frequencies and bandwidths of carriers that generate inter-modulation change. Therefore, when downlink scheduling is being performed, suitable frequencies of transmit carriers and suitable bandwidths occupied by the transmit carriers are selected, so that a generated inter-modulation interference signal and a receive frequency band are staggered or the receive frequency band is occupied as little as possible, and uplink scheduling is performed using a frequency range not occupied by the inter-modulation interference signal during the uplink scheduling, thereby resolving an inter-modulation interference problem.

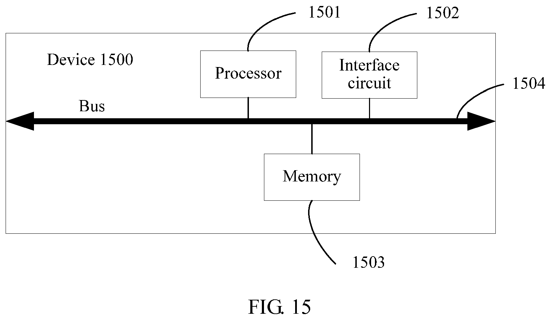

FIG. 15 is a schematic block diagram of a radio transmit device according to another embodiment of the present invention. As shown in FIG. 15, the radio transmit device 1500 includes a processor 1501 and an interface circuit 1502. FIG. 15 further shows a memory 1503 and a bus 1504. The processor 1501, the interface circuit 1502, and the memory 1503 are connected and complete mutual communication by using the bus 1504. The processor 1501 is configured to: determine a target carrier that may be interfered with by inter-modulation from the at least two carriers; select, from a receive frequency band of the target carrier, a receive sub-frequency band for the target carrier; determine a transmit sub-frequency band for each carrier according to the selected receive sub-frequency band, so that a non-overlapping part exists between a frequency range occupied by an inter-modulation interference signal generated by the transmit sub-frequency bands of the at least two carriers and the receive frequency band of the target carrier, where the non-overlapping part includes the selected receive sub-frequency band; and, through the interface circuit 1502, perform downlink scheduling using the transmit sub-frequency band of each carrier, and perform uplink scheduling using the receive sub-frequency band.

It should be noted that the processor 1501 herein may be one processor or may be a collective term of multiple processing elements. For example, the processor may be a central processing unit (Central Processing Unit, CPU), or an application specific integrated circuit (Application Specific Integrated Circuit, ASIC), or may be configured as one or more integrated circuits for implementing this embodiment of the present invention, for example, one or more microprocessors (digital singnal processors, DSPs) or one or more field programmable gate arrays (Field Programmable Gate Arrays, FPGAs).

The memory 1503 may be one storage apparatus or may be a collective term of multiple storage elements, and is configured to store executable program code, or a parameter, data, and the like that are required for running an access network management device. In addition, the memory 1503 may include a random access memory (RAM), or may include a non-volatile memory (non-volatile memory), for example, a disk memory or a flash (Flash).

The bus 1504 may be an Industry Standard Architecture (Industry Standard Architecture, ISA) bus, a Peripheral Component Interconnect (Peripheral Component, PCI) bus, or an Extended Industry Standard Architecture (Extended Industry Standard Architecture, EISA) bus, or the like. The bus 1504 may be classified into an address bus, a data bus, a control bus, and the like. For ease of description, in FIG. 15, the bus 1504 is represented by only one bold line, but this does not mean that there is only one bus or one type of bus.

According to this embodiment of the present invention, characteristics of an inter-modulation product are fully utilized to provide a manner of joint scheduling and frequency domain resource staggering so that an inter-modulation interference band does not fall within a receive frequency band as far as possible. In addition, for a frequency band that will be unavoidably interfered with by the inter-modulation product, a manner of no scheduling is used to resolve an inter-modulation interference problem. A frequency range of an inter-modulation interference signal changes as frequencies and bandwidths of carriers that generate inter-modulation change. Therefore, when downlink scheduling is being performed, suitable frequencies of transmit carrier and suitable bandwidths occupied by the transmit carriers are selected, so that a generated inter-modulation interference signal and a receive frequency band are staggered or the receive frequency band is occupied as little as possible, and uplink scheduling is performed using a frequency range not occupied by the inter-modulation interference signal during the uplink scheduling, thereby resolving an inter-modulation interference problem.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A scheduling method, used in a communications system that performs communication using at least two carriers, wherein each carrier comprises a transmit frequency band and a receive frequency band, and the method comprises:

   selecting, from the transmit frequency band of each carrier by a radio transmit device, a transmit sub-frequency band for each carrier, wherein there is at least one transmit sub-frequency band that is a proper subset of a transmit frequency band in which the at least one transmit sub-frequency band is located, so that a non-overlapping part exists between a frequency range occupied by an inter-modulation interference signal generated by all transmit sub-frequency bands and the receive frequency band of each carrier, wherein the non-overlapping part is a non-overlapping frequency range, and the frequency range occupied by the inter-modulation interference signal is an inter-modulation signal interference band; and
   performing, by the radio transmit device, downlink scheduling using the transmit sub-frequency band of each carrier and performing uplink scheduling using the non-overlapping frequency range.

2. The method according to claim 1, wherein the non-overlapping frequency range between the frequency range occupied by the inter-modulation interference signal and the receive frequency band of each carrier is all or a part of frequency ranges of the receive frequency band of the carrier.

3. The method according to claim 1 or 2, wherein a list is stored in the radio transmit device, and the list comprises multiple transmit sub-frequency band combinations and an inter-modulation signal interference band corresponding to each transmit sub-frequency band combination, wherein the transmit frequency band of each carrier comprises at least two sub-frequency ranges, any combination of the at least two sub-frequency ranges is a transmit sub-frequency band of the carrier, each transmit sub-frequency band combination comprises one transmit sub-frequency band of each carrier, and the selecting, from the transmit frequency band of each carrier by a radio transmit device, a transmit sub-frequency band for each carrier comprises:

selecting, from the list, a target transmit sub-frequency band combination that meets a requirement of a policy, wherein a non-overlapping part exists between an inter-modulation signal interference band corresponding to the target transmit sub-frequency band combination and the receive frequency band of each carrier; and selecting the transmit sub-frequency band from the transmit frequency band of each carrier according to the target transmit sub-frequency band combination.

4. The method according to claim 3, wherein the policy comprises one or more of the following policies: uplink resource utilization maximization policy, service traffic requirement policy, and interference tolerance policy, wherein the uplink resource utilization maximization policy requires that the non-overlapping part existing between the inter-modulation signal interference band corresponding to the target transmit sub-frequency band combination and the receive frequency band of each carrier be maximized;
the service traffic requirement policy requires that the transmit sub-frequency band of each carrier in the target transmit sub-frequency band combination meet a service traffic requirement; and
the interference tolerance policy requires that the non-overlapping part existing between the inter-modulation signal interference band corresponding to the target transmit sub-frequency band combination and the receive frequency band of each carrier be greater than or equal to a preset threshold.

5. The method according to claim 1 or 2, wherein a list is stored in the radio transmit device, and the list comprises multiple transmit sub-frequency band combinations and a non-overlapping frequency range corresponding to each transmit sub-frequency band combination, wherein the transmit frequency band of each carrier comprises at least two sub-frequency ranges, any combination of the at least two sub-frequency ranges is a transmit sub-frequency band of the carrier, each transmit sub-frequency band combination comprises one transmit sub-frequency band of each carrier, and the selecting, from the transmit frequency band of each carrier by a radio transmit device, a transmit sub-frequency band for each carrier comprises:

selecting, from the list, a target transmit sub-frequency band combination that meets a requirement of a policy; and
selecting the transmit sub-frequency band from the transmit frequency band of each carrier according to the target transmit sub-frequency band combination.

6. The method according to claim 5, wherein the policy comprises one or more of the following policies: uplink resource utilization maximization policy, service traffic requirement policy, and interference tolerance policy, wherein the uplink resource utilization maximization policy requires that the non-overlapping frequency range corresponding to the target transmit sub-frequency band combination be maximized;
the service traffic requirement policy requires that the transmit sub-frequency band of each carrier in the target transmit sub-frequency band combination meet a service traffic requirement; and
the interference tolerance policy requires that the non-overlapping frequency range corresponding to the target transmit sub-frequency band combination be greater than or equal to a preset threshold.

7. The method according to any one of claims 3 to 6, wherein the transmit frequency band of each carrier comprises a same quantity of sub-frequency ranges and each of the sub-frequency ranges has a same bandwidth.

8. The method according to claim 1 or 2, wherein: the transmit frequency band of each carrier comprises at least two sub-frequency ranges; for each carrier, any combination of the at least two sub-frequency ranges is a transmit sub-frequency band of the carrier; and the selecting, from the transmit frequency band of each carrier by a radio transmit device, a transmit sub-frequency band for the carrier comprises:

traversing all transmit sub-frequency band combinations and determining an inter-modulation signal interference band corresponding to each transmit sub-frequency band combination, wherein each transmit sub-frequency band combination comprises one transmit sub-frequency band of each carrier;
finding a transmit sub-frequency band combination corresponding to an inter-modulation signal interference band between which and the receive frequency band of each carrier there is a non-overlapping part;
selecting, from the found transmit sub-frequency band combination, a target transmit sub-frequency band combination that meets a requirement of a policy; and
selecting the transmit sub-frequency band from the transmit frequency band of each carrier according to the target transmit sub-frequency band combination.

9. The method according to claim 8, wherein the policy comprises one or more of the following policies: uplink resource utilization maximization policy, service traffic requirement policy, and interference tolerance policy, wherein the uplink resource utilization maximization policy requires that the non-overlapping part existing between the inter-modulation signal interference band corresponding to the target transmit sub-frequency band combination and the receive frequency band of each carrier be maximized, or requires that the non-overlapping frequency range corresponding to the target transmit sub-frequency band combination be maximized;

the service traffic requirement policy requires that the transmit sub-frequency band of each carrier in the target transmit sub-frequency band combination meet a service traffic requirement; and

the interference tolerance policy requires that the non-overlapping part existing between the inter-modulation signal interference band corresponding to the target transmit sub-frequency band combination and the receive frequency band of each carrier be greater than or equal to a preset threshold, or requires that the non-overlapping frequency range corresponding to the target transmit sub-frequency band combination be greater than or equal to a preset threshold.

10. A scheduling method, used in a communications system that performs communication using at least two carriers, wherein each carrier comprises a transmit frequency band and a receive frequency band, and the method comprises:

determining, by a radio transmit device from the at least two carriers, a target carrier that may be interfered with by inter-modulation;

selecting, from the receive frequency band of the target carrier by the radio transmit device, a receive sub-frequency band for the target carrier;

determining, by the radio transmit device, a transmit sub-frequency band for each carrier according to the selected receive sub-frequency band, so that a non-overlapping part exists between a frequency range occupied by an inter-modulation interference signal generated by the transmit sub-frequency bands of the at least two carriers and the receive frequency band of the target carrier, wherein the non-overlapping part comprises the selected receive sub-frequency band; and

performing, by the radio transmit device, downlink scheduling using the transmit sub-frequency band of each carrier and performing uplink scheduling using the receive sub-frequency band.

11. A radio transmit device, used in a communications system that performs communication using at least two carriers, wherein each carrier comprises a transmit frequency band and a receive frequency band, and the device comprises:

a selecting unit, configured to select, from the transmit frequency band of each carrier, a transmit sub-frequency band for each carrier, wherein there is at least one transmit sub-frequency band that is a proper subset of a transmit frequency band in which the at least one transmit sub-frequency band is located, so that a non-overlapping part exists between a frequency range occupied by an inter-modulation interference signal generated by all transmit sub-frequency bands and the receive frequency band of each carrier, wherein the non-overlapping part is a non-overlapping frequency range, and the frequency range occupied by the inter-modulation interference signal is an inter-modulation signal interference band; and

a scheduling unit, configured to perform downlink scheduling using the transmit sub-frequency band of each carrier and perform uplink scheduling using the non-overlapping frequency range.

12. The radio transmit device according to claim 11, wherein the non-overlapping frequency range between the frequency range occupied by the inter-modulation interference signal and the receive frequency band of each carrier is all or a part of frequency ranges of the receive frequency band of the carrier.

13. The radio transmit device according to claim 11 or 12, wherein a list is stored in the radio transmit device, and the list comprises multiple transmit sub-frequency band combinations and an inter-modulation signal interference band corresponding to each transmit sub-frequency band combination, wherein the transmit frequency band of each carrier comprises at least two sub-frequency ranges, any combination of the at least two sub-frequency ranges is a transmit sub-frequency band of the carrier, each transmit sub-frequency band combination comprises one transmit sub-frequency band of each carrier, and the selecting unit is specifically configured to:

select, from the list, a target transmit sub-frequency band combination that meets a requirement of a policy, wherein a non-overlapping part exists between an inter-modulation signal interference band corresponding to the target transmit sub-frequency band combination and the receive frequency band of each carrier; and

select the transmit sub-frequency band from the transmit frequency band of each carrier according to the target transmit sub-frequency band combination.

14. The radio transmit device according to claim 13, wherein the policy comprises one or more of the following policies: uplink resource utilization maximization policy, service traffic requirement policy, and interference tolerance policy, wherein

the uplink resource utilization maximization policy requires that the non-overlapping part existing between the inter-modulation signal interference band corresponding to the target transmit sub-frequency band combination and the receive frequency band of each carrier be maximized;

the service traffic requirement policy requires that the transmit sub-frequency band of each carrier in the target transmit sub-frequency band combination meet a service traffic requirement; and

the interference tolerance policy requires that the non-overlapping part existing between the inter-modulation signal interference band corresponding to the target transmit sub-frequency band combination and the receive frequency band of each carrier be greater than or equal to a preset threshold.

15. The radio transmit device according to claim 11 or 12, wherein a list is stored in the radio transmit device, and the list comprises multiple transmit sub-frequency band combinations and a non-overlapping frequency range corresponding to each transmit sub-frequency band combination, wherein the transmit frequency band of each carrier comprises at least two sub-frequency ranges, any combination of the at least two sub-frequency ranges is a transmit sub-frequency band of the carrier, each transmit sub-frequency band combination comprises one transmit sub-frequency band of each carrier, and the selecting unit is specifically configured to:

select, from the list, a target transmit sub-frequency band combination that meets a requirement of a policy; and
select the transmit sub-frequency band from the transmit frequency band of each carrier according to the target transmit sub-frequency band combination.

16. The radio transmit device according to claim 15, wherein the policy comprises one or more of the following policies: uplink resource utilization maximization policy, service traffic requirement policy, and interference tolerance policy, wherein

the uplink resource utilization maximization policy requires that the non-overlapping frequency range corresponding to the target transmit sub-frequency band combination be maximized;

the service traffic requirement policy requires that the transmit sub-frequency band of each carrier in the target transmit sub-frequency band combination meet a service traffic requirement; and

the interference tolerance policy requires that the non-overlapping frequency range corresponding to the target transmit sub-frequency band combination be greater than or equal to a preset threshold.

17. The radio transmit device according to any one of claims 13 to 16, wherein the transmit frequency band of each carrier comprises a same quantity of sub-frequency ranges and each of the sub-frequency ranges has a same bandwidth.

18. The radio transmit device according to claim 11 or 12, wherein: the transmit frequency band of each carrier comprises at least two sub-frequency ranges; for each carrier, any combination of the at least two sub-frequency ranges is a transmit sub-frequency band of the carrier; and the selecting unit is specifically configured to:

traverse all transmit sub-frequency band combinations and determine an inter-modulation signal interference band corresponding to each transmit sub-frequency band combination, wherein each transmit sub-frequency band combination comprises one transmit sub-frequency band of each carrier;

find a transmit sub-frequency band combination corresponding to an inter-modulation signal interference band between which and the receive frequency band of each carrier there is a non-overlapping part;

select, from the found transmit sub-frequency band combination, a target transmit sub-frequency band combination that meets a requirement of a policy; and

select the transmit sub-frequency band from the transmit frequency band of each carrier according to the target transmit sub-frequency band combination.

19. The radio transmit device according to claim 18, wherein the policy comprises one or more of the following policies: uplink resource utilization maximization policy, service traffic requirement policy, and interference tolerance policy, wherein

the uplink resource utilization maximization policy requires that the non-overlapping part existing between the inter-modulation signal interference band corresponding to the target transmit sub-frequency band combination and the receive frequency band of each carrier be maximized, or requires that the non-overlapping frequency range corresponding to the target transmit sub-frequency band combination be maximized;

the service traffic requirement policy requires that the transmit sub-frequency band of each carrier in the target transmit sub-frequency band combination meet a service traffic requirement; and

the interference tolerance policy requires that the non-overlapping part existing between the inter-modulation signal interference band corresponding to the target transmit sub-frequency band combination and the receive frequency band of each carrier be greater than or equal to a preset threshold, or requires that the non-overlapping frequency range corresponding to the target transmit sub-frequency band combination be greater than or equal to a preset threshold.

20. A radio transmit device, used in a communications system that performs communication using at least two carriers, wherein each carrier comprises a transmit frequency band and a receive frequency band, and the device comprises:

a determining unit, configured to determine, from the at least two carriers, a target carrier that may be interfered with by inter-modulation;

a selecting unit, configured to select, from the receive frequency band of the target carrier, a receive sub-frequency band for the target carrier, wherein

the determining unit is further configured to determine a transmit sub-frequency band for each carrier according to the selected receive sub-frequency band, so that a non-overlapping part exists between a frequency range occupied by an inter-modulation interference signal generated by the transmit sub-frequency bands of the at least two carriers and the receive frequency band of the target carrier, wherein the non-overlapping part comprises the selected receive sub-frequency band; and

a scheduling unit, configured to perform downlink scheduling using the transmit sub-frequency band of each carrier and perform uplink scheduling using the receive sub-frequency band.

FIG. 1

FIG. 2

f1    f2

RX

TX

IM3

FIG. 3

R1    R2    T1    T2

3rd    3rd

f3    F1    f4    F2    f1    f2    F3    F4

Foffset    Foffset

FIG. 4

| Downlink transmit frequency band 510 of C1 | Downlink transmit frequency band 520 of C2 | Uplink receive frequency bandwidth 530 of C1 |
|---|---|---|
| Sub-frequency range 511 | Sub-frequency range 521 | |

Frequency

Inter-modulation interference signal 552

Inter-modulation interference signal 551

FIG. 5

600

| A radio transmit device selects, from a transmit frequency band of each carrier, a transmit sub-frequency band for each carrier, where there is at least one transmit sub-frequency band that is a proper subset of a transmit frequency band in which the at least one transmit sub-frequency band is located, so that a non-overlapping part exists between a frequency range occupied by an inter-modulation interference signal generated by all transmit sub-frequency bands and a receive frequency band of each carrier, where the non-overlapping part is a non-overlapping frequency range and the frequency range occupied by the foregoing inter-modulation interference signal is an inter-modulation signal interference band | 610 |
|---|---|
| The radio transmit device performs downlink scheduling using the transmit sub-frequency band of each carrier and performs uplink scheduling using the non-overlapping frequency range | 620 |

FIG. 6

700

| Search a list and select, from the list, a target transmit sub-frequency band combination that meets a requirement of a policy, where when the list is an inter-modulation signal interference band list, a non-overlapping part exists between an inter-modulation signal interference band corresponding to the target transmit sub-frequency band combination and the receive frequency band of each carrier | 710 |

| Select a transmit sub-frequency range from the transmit frequency band of each carrier according to the selected target transmit sub-frequency range combination | 720 |

FIG. 7

800

| Traverse all transmit sub-frequency band combinations and determine an inter-modulation signal interference band corresponding to each transmit sub-frequency band combination | 810 |

| Find a transmit sub-frequency band combination corresponding to an inter-modulation signal interference band between which and a receive frequency band of each carrier there is a non-overlapping part | 820 |

| Select, from the found transmit sub-frequency band combination, a target transmit sub-frequency band combination that meets a requirement of a policy | 830 |

| Select a transmit sub-frequency range from the transmit frequency band of each carrier according to the selected target transmit sub-frequency range combination | 840 |

FIG. 8

FIG. 9

FIG. 10

A radio transmit device determines, from the at least two carriers, a target carrier that may be interfered with by inter-modulation — 1110

The radio transmit device selects, from a receive frequency band of the target carrier, a receive sub-frequency band for the target carrier — 1120

The radio transmit device determines a transmit sub-frequency band for each carrier according to the selected receive sub-frequency band, so that a non-overlapping part exists between a frequency range occupied by an inter-modulation interference signal generated by transmit sub-frequency bands of all the carriers and the receive frequency band of the target carrier, where the non-overlapping part includes the selected receive sub-frequency band — 1130

The radio transmit device performs downlink scheduling using the transmit sub-frequency band of each carrier and performs uplink scheduling using the receive sub-frequency band of the target carrier, where, for another carrier except the target carrier, the whole receive frequency band of the carrier may be used to perform uplink scheduling — 1140

FIG. 11

Radio transmit device 1200

Selecting unit 1210

Scheduling unit 1220

FIG. 12

```
┌─────────────────────────────────────────────┐
│  Radio transmit device 1300                 │
│  ┌───────────────────────────────────────┐  │
│  │       Determining unit 1310           │  │
│  └───────────────────────────────────────┘  │
│                     │                        │
│  ┌───────────────────────────────────────┐  │
│  │        Selecting unit 1320            │  │
│  └───────────────────────────────────────┘  │
│                     │                        │
│  ┌───────────────────────────────────────┐  │
│  │        Scheduling unit 1330           │  │
│  └───────────────────────────────────────┘  │
└─────────────────────────────────────────────┘
```

FIG. 13

```
                        ┌─ 1401        ┌─ 1402
┌────────────────────────────────────────────────────────────┐
│  Device 1400      ┌───────────┐  ┌───────────┐             │
│                   │ Processor │  │ Interface │        ┌─ 1404│
│         Bus       └───────────┘  │  circuit  │             │
│  ◄═══════════════════════┬═══════════┬═══════════════════►  │
│                          │           │                      │
│                     ┌──────────────┐                        │
│                     │    Memory    │                        │
│                     └──────────────┘                        │
│                            │                                │
│                            └─ 1403                          │
└────────────────────────────────────────────────────────────┘
```

FIG. 14

FIG. 15

# INTERNATIONAL SEARCH REPORT

| International application No. |
|---|
| PCT/CN2015/088621 |

## A. CLASSIFICATION OF SUBJECT MATTER

H04B 1/10 (2006.01) i

According to International Patent Classification (IPC) or to both national classification and IPC

## B. FIELDS SEARCHED

Minimum documentation searched (classification system followed by classification symbols)

H04B H04W

Documentation searched other than minimum documentation to the extent that such documents are included in the fields searched

Electronic data base consulted during the international search (name of data base and, where practicable, search terms used)

CNKI, CNPAT, WPI, EPODOC, GOOGLE, IEEE: emission band, emission, subband, subset, passive intermodulation, far from, receiving band, frequency band, intersection, no, isolation, carrier, band, frequency, intermodulation, sub, part, set, interfere????, inter, modulation, disturb??, PIM, passive, transmit???, receiv???, separately, two, double, multi, multiply, overlap, adjacen??, neighbo

## C. DOCUMENTS CONSIDERED TO BE RELEVANT

| Category* | Citation of document, with indication, where appropriate, of the relevant passages | Relevant to claim No. |
|---|---|---|
| A | US 5835857 A (CELSAT AMERICA INC.), 10 November 1998 (10.11.1998), description, column 7, paragraph 6 to column 8, paragraph 7, and figures 2 and 14 | 1-20 |
| A | CN 102469467 A (DATANG MOBILE COMMUNICATIONS EQUIPMENT CO., LTD.), 23 May 2012 (23.05.2012), the whole document | 1-20 |
| A | CN 103986482 A (BEIJING INSTITUTE OF TECHNOLOGY), 13 August 2014 (13.08.2014), the whole document | 1-20 |
| A | US 2015244414 A1 (SCINTERA NETWORKS LLC), 27 August 2015 (27.08.2015), the whole document | 1-20 |
| A | EP 2323214 A1 (ALCATEL LUCENT), 18 May 2011 (18.05.2011), the whole document | 1-20 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 May 2016 (14.05.2016) | 01 June 2016 (01.06.2016) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer XIONG, Jin'an Telephone No.: (86-10) 62413381 |
|---|---|

Form PCT/ISA/210 (second sheet) (July 2009)

## INTERNATIONAL SEARCH REPORT
### Information on patent family members

International application No.

**PCT/CN2015/088621**

| Patent Documents referred in the Report | Publication Date | Patent Family | Publication Date |
|---|---|---|---|
| US 5835857 A | 10 November 1998 | US 5832379 A | 03 November 1998 |
| | | US 5995832 A | 30 November 1999 |
| | | US 5940753 A | 17 August 1999 |
| | | WO 9534138 A1 | 14 December 1995 |
| | | WO 9115071 A1 | 03 October 1991 |
| | | AU 7692291 A | 21 October 1991 |
| | | US 5073900 A | 17 December 1991 |
| | | EP 0476127 A1 | 25 March 1992 |
| | | JP H04506294 A | 29 October 1992 |
| | | US 5339330 A | 16 August 1994 |
| | | US 5446756 A | 29 August 1995 |
| | | WO 9534181 A1 | 14 December 1995 |
| | | WO 9534177 A1 | 14 December 1995 |
| | | US 5612703 A | 18 March 1997 |
| | | EP 0769857 A2 | 23 April 1997 |
| | | CA 2053851 A1 | 20 September 1991 |
| | | US 5878329 A | 02 March 1999 |
| | | US 6108561 A | 22 August 2000 |
| CN 102469467 A | 23 May 2012 | EP 2642710 A1 | 25 September 2013 |
| | | WO 2012065538 A1 | 24 May 2012 |
| | | US 2013235837 A1 | 12 September 2013 |
| CN 103986482 A | 13 August 2014 | None | |
| US 2015244414 A1 | 27 August 2015 | CN 104883197 A | 02 September 2015 |
| EP 2323214 A1 | 18 May 2011 | None | |

Form PCT/ISA/210 (patent family annex) (July 2009)